# EUROPEAN PATENT APPLICATION

(11) **EP 3 744 465 A1**
(43) Date of publication of application: **02.12.2020**
(21) Application number: 19760175.0
(22) Date of filing: 25.01.2019
(51) Int. Cl.: B23K 9/23, B21D 28/26, B23K 9/00, B23K 9/02, B23K 9/167, B23K 10/02

(54) **ARC WELDING METHOD FOR DISSIMILAR MATERIAL BONDING**

(30) Priority: 28.02.2018 JP 2018035397
(71) Applicant: Kabushiki Kaisha Kobe Seiko Sho (Kobe Steel, Ltd.), Kobe-shi, Hyogo 651-8585 (JP)
(72) Inventor: SUZUKI Reiichi, Kanagawa 251-8551 (JP)
(74) Representative: Müller-Boré & Partner Patentanwälte PartG mbB
(86) International application number: PCT/JP2019/002577
(87) International publication number: WO 2019/167502

(57) **Abstract**

An arc welding method for bonding dissimilar materials is provided which enables bonding, strongly and with highly reliable quality, an aluminum alloy or magnesium alloy and a dissimilar steel material using economical arc welding equipment, and which can be applied without restriction to open cross-section structures and closed cross-section structures. This dissimilar material bonding joint (1) is provided with an aluminum alloy or magnesium alloy upper plate (10), a steel lower plate (20) arc welded onto the upper plate (10), and a steel bonding auxiliary member (30). The bonding auxiliary member (30) has a stepped outer shape having a large-diameter part (32) and a small-diameter part (31), and a hollow section (33) is formed that passes through the large-diameter part (32) and the small-diameter part (31). The bonding auxiliary member (30) is pressed fitted into a hole (11) that is formed by punching the upper plate (10), and the hollow section (33) is filled with an iron alloy or Ni alloy welding metal (40).

## Description

### TECHNICAL FIELD

The present invention relates to an arc welding method for dissimilar material joining.

### BACKGROUND ART

Transport equipment as typified by automobiles is always required to be increased in drive fuel efficiency for the purpose of suppressing various items such as (a) the consumption of petroleum fuels which are limited resources, (b) CO₂ which is a global warming gas generated with burning, and (c) the running cost. Among means as an improvement measure is vehicle weight reduction as well as improvements in motive force-related technologies such as use of electric driving. One means for weight reduction is to replace steel which is a current main material with light materials such as aluminum alloys, magnesium alloys, carbon fiber, etc. However, replacing all of the materials with such light materials has problems such as cost increase and insufficiency in strength. As a countermeasure against these problems, a design method so called "multi-material" in which a proper combination of steel and a light material are used at each location is now attracting attention.

Combining steel and any of the above-described light materials necessarily results in occurrence of a position where to join these materials. Whereas steel materials, aluminum alloy materials, or magnesium alloy materials can be welded to each other easily, it is known that welding of different materials is very difficult. This is because intermetallic compounds (IMC) which are very fragile are formed in a melt-mixing portion between steel and aluminum or magnesium and destroyed easily when receiving external stress caused by tension, impact, or the like. As a result, such welding methods as the resistance spot welding method and the arc welding method cannot be used for dissimilar material joining and it is common to use other joining methods. Welding cannot be used for joining of steel and carbon fiber because the latter is not a metal.

Among conventional dissimilar material joining techniques is, for example, a means in which through-holes are formed through both of a steel material and a light material and they are bound together by pressing them against each other from both sides using a bolt and a nut. Another example means is known in which materials are bound together by a swaging effect by inserting a swaging member from one side by applying a strong pressure to it (refer to Patent Document 1, for example).

A still another example means is proposed in which a steel joining member is pushed, as a punch, into an aluminum alloy material, whereby a hole is formed and the joining member is bound tentatively. Subsequently, the aluminum alloy material is overlapped with a steel material, the two kinds of members are sandwiched between copper electrodes from both sides, and the steel material and the joining member are resistance-welded to each other by applying pressure and large current to them instantaneously. (Refer to Patent Document 2, for example.)

A further example means has been developed in which an aluminum alloy material and a steel material are joined together directly using a friction stir joining tool (refer to Patent Document 3, for example).

### PRIOR ART DOCUMENTS

### Patent Documents

Patent Document 1: JP-A-2002-174219
Patent Document 2: JP-A-2009-285678
Patent Document 3: Japanese Patent No. 5,044,128

### SUMMARY OF THE INVENTION

### TECHNICAL PROBLEM

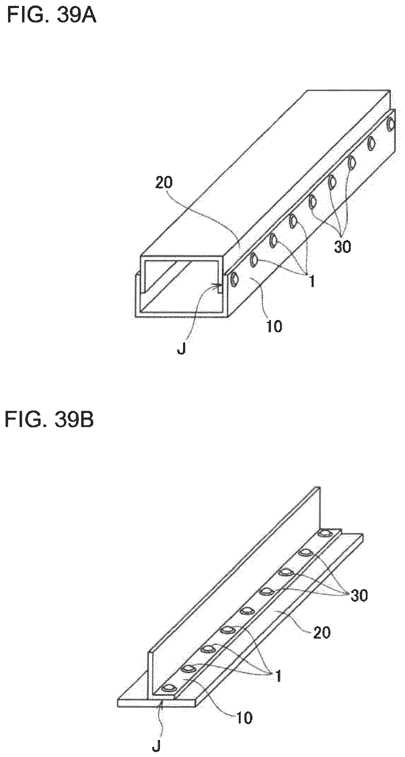

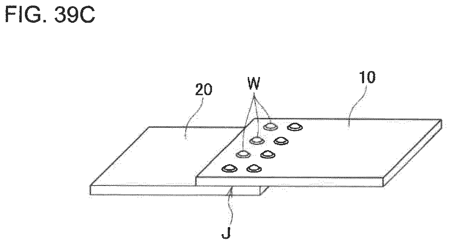

However, the bolt-nut joining method cannot be applied to a case that a steel material and a light material form a structure having a closed cross section (see FIG. 39A) because nuts cannot be inserted. Even in the case of a joint having an open cross section structure to which this method is applicable (see FIG. 39B and FIG. 39C), another problem of low efficiency arises because screwing nuts into the materials takes time.

Though the joining method disclosed in Patent Document 1 is a relatively easy method, it is associated with a problem that the swaging member cannot be inserted in the case where the steel material is high in strength and a problem that high joining strength cannot be obtained because the joining strength depends on the frictional force and the stiffness of the swaging member. There is another problem that this joining method cannot be applied to a closed cross section structure because it is necessary to press the swaging member by a jig from the front side and the back side when inserting.

The joining method disclosed in Patent Document 2 cannot be applied to a closed cross section structure, either. And there is another problem that a facility for a resistance welding method is very expensive.

As for the joining method disclosed in Patent Document 3, where pressure is applied to the surface of a steel material while an aluminum alloy material is caused to flow plastically in a low temperature range, the two materials do not melt-mix with each other, necessary metallic bonding force can be obtained without formation of intermetallic compounds. There exists a study report stating that joining of steel and carbon fiber is also possible. However, this joining method is associated with problems that it cannot be applied to a closed cross section structure either, and that it requires a large mechanical facility and hence is expensive because high pressure needs to be generated. Furthermore, resulting joining force is not very strong.

As such, each of the existing dissimilar material joining techniques has one or more of the problems that (i) the materials and the groove shape are restricted to ones suitable for an open cross section structure, (ii) the joining strength is low, and (iii) the facility cost is high. Thus, to spread multi-material designing that enables combination of various kinds of materials, a new technique is desired that is easy to use and satisfies all of conditions of (i') being applicable to both of an open cross section structure and a closed cross section structure, (ii') attaining sufficiently high joining strength and being high in reliability, and (iii') being low in cost.

The present invention has been made in view of the above problems, and an object of the invention is therefore to provide an arc welding method for dissimilar material joining that make it possible to join different materials, that is, steel and an aluminum alloy (hereinafter also referred to as "Al alloy") or a magnesium alloy (hereinafter also referred to as "Mg alloy"), with quality of being high in strength and reliability using an inexpensive facility already available on the market, and that can be applied to both of an open cross section structure and a closed cross section structure with no limitations.

### SOLUTION TO PROBLEM

To melt-join steel and an Al alloy or an Mg alloy, formation of intermetallic compounds (IMC) is unavoidable as mentioned above. On the other hand, it is apparent scientifically and empirically that steel-to-steel welding provides highest joining strength and reliability.

In view of the above, the inventors have conceived a means capable of joining dissimilar materials by using steel-to-steel welding as connection force and using binding force.

The above object of the invention is thus attained by configuration (1) described below.
(1) An arc welding method for dissimilar material joining for joining a first plate made of an aluminum alloy or a magnesium alloy and a second plate made of steel, the method including:
   a step of placing a steel-made joining assist member that has a stepped external shape including a large-diameter portion and a small-diameter portion that is smaller in maximum outer diameter than the large-diameter portion, has a hollow portion formed to penetrate the large-diameter portion and the small-diameter portion, and has a total height of the large-diameter portion and the small-diameter portion being equal to or larger than a thickness of the first plate, in a manner that the small-diameter portion faces the first plate, and applying a pressure to the joining assist member to punch the first plate;
   a step of overlapping the first plate with the second plate; and
   a step of filling the hollow portion of the joining assist member with a weld metal, and melting the weld metal until a penetration bead is formed on the second plate, to weld the second plate and the joining assist member together by any method of the following (a) to (e):
      (a) a gas-shielded arc welding method using, as a consumable electrode, a welding wire to provide the weld metal made of an iron alloy or a Ni alloy;
      (b) a non-gas arc welding method using the welding wire as a consumable electrode;
      (c) a gas tungsten arc welding method using the welding wire as a non-consumable electrode filler;
      (d) a plasma arc welding method using the welding wire as a non-consumable electrode filler; and
      (e) a coated arc welding method using, as a consumable electrode, a coated arc welding rod to provide the weld metal made of an iron alloy or a Ni alloy.

Moreover, preferred embodiments of the invention relate to (2) to (11) below.
(2) The arc welding method for dissimilar material joining according to (1) above, wherein at least one press-fitting protrusion is disposed on an outer peripheral surface of the small-diameter portion.
(3) The arc welding method for dissimilar material joining according to (1) above, wherein a medium-diameter portion that is smaller in maximum outer diameter than the large-diameter portion is disposed on an outer peripheral surface of the small-diameter portion, without being in contact with the large-diameter portion, and continuously or intermittently along the outer peripheral surface.
(4) The arc welding method for dissimilar material joining according to any one of (1) to (3) above, the method further including, before the overlapping step, a step of applying an adhesive to at least one of overlapped surfaces of the first plate and the second plate around a hole of the first plate over its entire circumference, the hole being formed in the punching step.
(5) The arc welding method for dissimilar material joining according to any one of (1) to (4) above, wherein, in the punching step, an adhesive is applied to at least one of confronting surfaces between the joining assist member and the first plate opposed to the joining assist member.
(6) The arc welding method for dissimilar material joining according to any one of (1) to (5) above, wherein, in the punching step or after the filling and welding step, an adhesive is applied to at least a boundary between the joining assist member and a surface of the first plate.
(7) The arc welding method for dissimilar material joining according to any one of (1) to (6) above, wherein a protrusion amount of the small-diameter portion of the joining assist member, from the first plate is 25% or less of the thickness of the first plate.
(8) The arc welding method for dissimilar material joining according to any one of (1) to (7) above, wherein, in the filling and welding step, a pressing mechanism that is able to perform pressing in a direction in which the first plate and the second plate are closely contacted with each other is provided, and
   the second plate and the joining assist member are welded together while the pressing mechanism performs pressing in a manner that the first plate and the second plate are closely contacted with each other.
(9) The arc welding method for dissimilar material joining according to (8) above, wherein the pressing mechanism is provided in a welding torch that is used in the filling and welding step, and the pressing mechanism includes a pressing portion that abuts against at least one of the first plate and the joining assist member.
(10) The arc welding method for dissimilar material joining according to any one of (1) to (9) above, wherein the first plate is punched so that an exposed surface of the large-diameter portion of the joining assist member is located to be nearly flush with or outside a surface of the first plate.
(11) The arc welding method for dissimilar material joining according to any one of (1) to (10) above, wherein in the filling and welding step, when the hollow portion of the joining assist member is filled with the weld metal, an excess weld metal is formed on a surface of the joining assist member.

### ADVANTAGEOUS EFFECTS OF INVENTION

The invention makes it possible to join different materials, that is, steel and an aluminum alloy or a magnesium alloy, with quality of being high in strength and reliability using an inexpensive arc welding facility and enables application to both of an open cross section structure and a closed cross section structure with no limitations.

### BRIEF DESCRIPTION OF THE DRAWINGS

[FIG. 1A] FIG. 1A is a perspective view of a dissimilar material welded joint in an embodiment of the invention.
[FIG. 1B] FIG. 1B is a sectional view of the dissimilar material welded joint taken along line I-I in FIG. 1A.
[FIG. 2] FIG. 2 is a perspective view and sectional view of the joining assist member in the embodiment.
[FIG. 3A] FIG. 3A is a view showing a punching work (step S1) of an arc welding method for dissimilar material joining of the embodiment.
[FIG. 3B] FIG. 3B is a view showing a first step of an example of the punching work.
[FIG. 3C] FIG. 3C is a view showing a second step of the example of the punching work.
[FIG. 3D] FIG. 3D is a view showing a third step of the example of the punching work.
[FIG. 3E] FIG. 3E is a view showing a fourth step of the example of the punching work.
[FIG. 3F] FIG. 3F is a view showing an overlapping work (step S2) of the arc welding method for dissimilar material joining of the embodiment.
[FIG. 3G] FIG. 3G is a view showing a welding work (step S3) of the arc welding method for dissimilar material joining of the embodiment.
[FIG. 4A] FIG. 4A is a perspective view of a dissimilar material welded joint as a comparative example in which a top plate made of aluminum and a bottom plate made of steel are overlapped and welded by penetration welding.
[FIG. 4B] FIG. 4B is a sectional view of the dissimilar material welded joint of FIG. 4A.
[FIG. 5A] FIG. 5A is a sectional view showing a state where shearing tension is acting on the dissimilar material welded joint of FIG. 4A.
[FIG. 5B] FIG. 5B is a perspective view showing the dissimilar material welded joint of FIG. 5A.
[FIG. 6A] FIG. 6A is a sectional view showing a state where vertical peeling tension is acting on the dissimilar material welded joint of FIG. 4A.
[FIG. 6B] FIG. 6B is a perspective view showing the dissimilar material welded joint of FIG. 6A.
[FIG. 7A] FIG. 7A is a perspective view of a dissimilar material welded joint as a comparative example in which a top plate made of aluminum and having a hole and a bottom plate made of steel are overlapped and welded by penetration welding.
[FIG. 7B] FIG. 7B is a sectional view of the dissimilar material welded joint of FIG. 7A.
[FIG. 8A] FIG. 8A is a sectional view showing a state where shearing tension is acting on the dissimilar material welded joint of FIG. 7A.
[FIG. 8B] FIG. 8B is a perspective view showing a state where shearing tension is acting on the dissimilar material welded joint of FIG. 7A and the joining portion is inclined by close to 90°.
[FIG. 9A] FIG. 9A is a sectional view showing a state where vertical peeling tension is acting on the dissimilar material welded joint of FIG. 7A.
[FIG. 9B] FIG. 9B is a perspective view showing the dissimilar material welded joint of FIG. 9A.
[FIG. 10A] FIG. 10A is a view showing an example of a punching work using a press-fitting apparatus that includes an upper pedestal, a lower pedestal, and a pressing mechanism.
[FIG. 10B] FIG. 10B is a view showing another example of the punching work using a press-fitting apparatus that includes by an upper pedestal, a lower pedestal, and a pressing mechanism.
[FIG. 10C] FIG. 10C is a view showing a top plate made of aluminum in a state where a joining assist member is press-fitted in the punching work.
[FIG. 11] FIG. 11 is a sectional view for description of a gap G in a state where the top plate into which a joining assist member is press-fitted overlaps the bottom plate.
[FIG. 12A] FIG. 12A is a perspective view showing a first example of a pressing mechanism for pressing the top plate and the bottom plate in the filling and welding step.
[FIG. 12B] FIG. 12B is a perspective view showing a second example of the pressing mechanism for pressing the top plate and the bottom plate in the filling and welding step.
[FIG. 12C] FIG. 12C is a perspective view showing a third example of the pressing mechanism for pressing the top plate and the bottom plate in the filling and welding step.
[FIG. 12D] FIG. 12D is a perspective view showing a fourth example of the pressing mechanism for pressing the top plate and the bottom plate in the filling and welding step.
[FIG. 13] FIG. 13 is a sectional view for description of a protrusion amount P in a state where the top plate into which the joining assist member is press-fitted overlaps the bottom plate.
[FIG. 14A] FIG. 14A is a sectional view of the dissimilar material welded joint in the embodiment.
[FIG. 14B] FIG. 14B is a sectional view showing a state where vertical peeling tension is acting on the dissimilar material welded joint of FIG. 14A.
[FIG. 15A] FIG. 15A is a front view of the joining assist member in the embodiment.
[FIG. 15B] FIG. 15B is a front view showing a first modification of the joining assist member.
[FIG. 15C] FIG. 15C is a front view showing a second modification of the joining assist member.
[FIG. 15D] FIG. 15D is a front view showing a third modification of the joining assist member.
[FIG. 15E] FIG. 15E is a front view showing a fourth modification of the joining assist member.
[FIG. 16A] FIG. 16A is a side view showing a fifth modification of the joining assist member.
[FIG. 16B] FIG. 16B is a side view showing a sixth modification of the joining assist member.
[FIG. 16C] FIG. 16C is a side view showing a seventh modification of the joining assist member.
[FIG. 17] FIG. 17 is a sectional view of the dissimilar material welded joint of the embodiment, for description of another role of the joining assist member.
[FIG. 18A] FIG. 18A is a view showing a first example for description of the pushing amount of the joining assist member into the top plate.
[FIG. 18B] FIG. 18B is a view showing a second example for description of the pushing amount of the joining assist member into the top plate.
[FIG. 18C] FIG. 18C is a view showing a third example for description of the pushing amount of the joining assist member into the top plate.
[FIG. 18D] FIG. 18D is a view showing a fourth example for description of the pushing amount of the joining assist member into the top plate.
[FIG. 19A] FIG. 19A is a front view showing an eighth modification of the joining assist member.
[FIG. 19B] FIG. 19B is a front view showing a ninth modification of the joining assist member.
[FIG. 19C] FIG. 19C is a front view showing a tenth modification of the joining assist member.
[FIG. 19D] FIG. 19D is a front view showing an eleventh modification of the joining assist member.
[FIG. 19E] FIG. 19E is a front view showing a twelfth modification of the joining assist member.
[FIG. 19F] FIG. 19F is a front view showing a thirteenth modification of the joining assist member.
[FIG. 19G] FIG. 19G is a front view showing a fourteenth modification of the joining assist member.
[FIG. 20] FIG. 20 is a perspective view showing a fifteenth modification of the joining assist member.
[FIG. 21] FIG. 21 is a side view showing a sixteenth modification of the joining assist member.
[FIG. 22A] FIG. 22A is a sectional view showing a dissimilar material welded joint in which no excess weld metal is formed.
[FIG. 22B] FIG. 22B is a sectional view showing a state where external stress is acting on the dissimilar material welded joint of FIG. 22A in the thickness direction (three-dimensional direction).
[FIG. 23] FIG. 23 is a sectional view showing a state where external stress is acting on a dissimilar material welded joint in which an excess weld metal is formed, in the thickness direction (three-dimensional direction).
[FIG. 24A] FIG. 24A is a sectional view (a case where a penetration bead is formed) of a dissimilar material welded joint for description of weld penetration of a weld metal.
[FIG. 24B] FIG. 24B is a sectional view (a case where a penetration bead is not formed) of a dissimilar material welded joint for description of weld penetration of a weld metal.
[FIG. 25] FIG. 25 is a view showing a state where arc welding is applied in a horizontal position.
[FIG. 26A] FIG. 26A is a perspective view showing the joining assist member having press-fitting protrusions in the embodiment.
[FIG. 26B] FIG. 26B is a side view of the joining assist member having press-fitting protrusions, and a sectional view taken along line II-II.
[FIG. 27] FIG. 27 is a view for description of a holding mechanism in the case where the joining assist member having press-fitting protrusions is to be press-fitted into the top plate.
[FIG. 28A] FIG. 28A is a main portion side view of a first modification of the joining assist member having press-fitting protrusions.
[FIG. 28B] FIG. 28B is a main portion side view of a second modification of the joining assist member having press-fitting protrusions.
[FIG. 28C] FIG. 28C is a main portion side view of a third modification of the joining assist member having press-fitting protrusions.
[FIG. 28D] FIG. 28D is a main portion side view of a fourth modification of the joining assist member having press-fitting protrusions.
[FIG. 28E] FIG. 28E is a main portion side view of a fifth modification of the joining assist member having press-fitting protrusions.
[FIG. 28F] FIG. 28F is a main portion side view of a sixth modification of the joining assist member having press-fitting protrusions.
[FIG. 28G] FIG. 28G is a main portion side view of a seventh modification of the joining assist member having press-fitting protrusions.
[FIG. 28H] FIG. 28H is a main portion side view of an eighth modification of the joining assist member having press-fitting protrusions.
[FIG. 28I] FIG. 28I is a main portion side view of a ninth modification of the joining assist member having press-fitting protrusions.
[FIG. 28J] FIG. 28J is a main portion side view of a tenth modification of the joining assist member having press-fitting protrusions.
[FIG. 28K] FIG. 28K is a main portion side view of an eleventh modification of the joining assist member having press-fitting protrusions.
[FIG. 29A] FIG. 29A is a perspective view of a twelfth modification of the joining assist member having press-fitting protrusions.
[FIG. 29B] FIG. 29B is a perspective view of a thirteenth modification of the joining assist member having press-fitting protrusions.
[FIG. 29C] FIG. 29C is a perspective view of a fourteenth modification of the joining assist member having press-fitting protrusions.
[FIG. 30A] FIG. 30A is a side view of the fourteenth modification of the joining assist member having press-fitting protrusions, and a sectional view taken along line XXXa-XXXa.
[FIG. 30B] FIG. 30B is a side view of a fifteenth modification of the joining assist member having press-fitting protrusions, and a sectional view taken along line XXXb-XXXb.
[FIG. 30C] FIG. 30C is a side view of a sixteenth modification of the joining assist member having press-fitting protrusions, and a sectional view taken along line XXXc-XXXc.
[FIG. 30D] FIG. 30D is a side view of a seventeenth modification of the joining assist member having press-fitting protrusions, and a sectional view taken along line XXXd-XXXd.
[FIG. 30E] FIG. 30E is a side view of an eighteenth modification of the joining assist member having press-fitting protrusions, and a sectional view taken along line XXXe-XXXe.
[FIG. 31A] FIG. 31A is a sectional view of the dissimilar material welded joint of the embodiment.
[FIG. 31B] FIG. 31B is a sectional view taken along line XXXI-XXXI in FIG. 31A.
[FIG. 32A] FIG. 32A is a main portion side view of a nineteenth modification of the joining assist member having press-fitting protrusions.
[FIG. 32B] FIG. 32B is a main portion side view of a twentieth modification of the joining assist member having press-fitting protrusions.
[FIG. 32C] FIG. 32C is a main portion side view of a twenty-first modification of the joining assist member having press-fitting protrusions.
[FIG. 32D] FIG. 32D is a main portion side view of a twenty-second modification of the joining assist member having press-fitting protrusions.
[FIG. 32E] FIG. 32E is a main portion side view of a twenty-third modification of the joining assist member having press-fitting protrusions.
[FIG. 33A] FIG. 33A is a perspective view and side view of the joining assist member having a medium-diameter portion in the embodiment.
[FIG. 33B] FIG. 33B is a perspective view and side view of a first modification of the joining assist member having a medium-diameter portion.
[FIG. 33C] FIG. 33C is a perspective view and side view of a second modification of the joining assist member having a medium-diameter portion.
[FIG. 33D] FIG. 33D is a perspective view and side view of a third modification of the joining assist member having a medium-diameter portion.
[FIG. 33E] FIG. 33E is a perspective view and side view of a fourth modification of the joining assist member having a medium-diameter portion.
[FIG. 33F] FIG. 33F is a perspective view and side view of a fifth modification of the joining assist member having a medium-diameter portion.
[FIG. 33G] FIG. 33G is a perspective view and side view of a sixth modification of the joining assist member having a medium-diameter portion.
[FIG. 33H] FIG. 33H is a perspective view and side view of a seventh modification of the joining assist member having a medium-diameter portion.
[FIG. 34A] FIG. 34A is a perspective view and side view of an eighth modification of the joining assist member having a medium-diameter portion.
[FIG. 34B] FIG. 34B is a perspective view and side view of a ninth modification of the joining assist member having a medium-diameter portion.
[FIG. 34C] FIG. 34C is a perspective view and side view of a tenth modification of the joining assist member having a medium-diameter portion.
[FIG. 34D] FIG. 34D is a perspective view and side view of an eleventh modification of the joining assist member having a medium-diameter portion.
[FIG. 35A] FIG. 35A is a side view showing a twenty-fourth modification of the joining assist member.
[FIG. 35B] FIG. 35B is a view showing a first example for description of a projection portion in the joining assist member that does not affect the joint strength.
[FIG. 35C] FIG. 35C is a view showing a second example for description of a projection portion in the joining assist member that does not affect the joint strength.
[FIG. 35D] FIG. 35D is a view showing a third example for description of a projection in the joining assist member that does not affect the joint strength.
[FIG. 35E] FIG. 35E is a view showing a fourth example for description of a projection in the joining assist member that does not affect the joint strength.
[FIG. 35F] FIG. 35F is a view showing a fifth example for description of a projection in the joining assist member that does not affect the joint strength.
[FIG. 35G] FIG. 35G is a view showing a sixth example for description of a projection in the joining assist member that does not affect the joint strength.
[FIG. 36A] FIG. 36A is a perspective view of the top plate and the bottom plate for description of a first modification of the arc welding method for dissimilar material joining.
[FIG. 36B] FIG. 36B is a sectional view of the top plate and the bottom plate for description of the first modification of the arc welding method for dissimilar material joining.
[FIG. 37A] FIG. 37A is a perspective view of the top plate and the bottom plate for description of a second modification of the arc welding method for dissimilar material joining.
[FIG. 37B] FIG. 37B is a sectional view of the top plate and the bottom plate for description of the second modification of the arc welding method for dissimilar material joining.
[FIG. 38A] FIG. 38A is a perspective view of the dissimilar material welded joint for description of a third modification of the arc welding method for dissimilar material joining.
[FIG. 38B] FIG. 38B is a sectional view of the dissimilar material welded joint for description of the third modification of the arc welding method for dissimilar material joining.
[FIG. 38C] FIG. 38C is a sectional view of the dissimilar material welded joint for description of a fourth modification of the arc welding method for dissimilar material joining.
[FIG. 39A] FIG. 39A is a perspective view showing a closed cross section structure to which the dissimilar material welded joint in the embodiment is applied.
[FIG. 39B] FIG. 39B is a perspective view showing an open cross section structure which is formed by an L-shaped plate and a flat plate, and to which the dissimilar material welded joint in the embodiment is applied.
[FIG. 39C] FIG. 39C is a perspective view showing an open cross section structure which is formed by two flat plates, and to which the dissimilar material welded joint in the embodiment is applied.
[FIG. 40] FIG. 40 is a view showing a fifth modification (method for producing an open cross section member) of the arc welding method for dissimilar material joining.
[FIG. 41] FIG. 41 is a view showing a sixth modification (method for producing a closed cross section member) of the arc welding method for dissimilar material joining.

### DESCRIPTION OF EMBODIMENTS

An arc welding method for dissimilar material joining according to an embodiment of the present invention is hereinafter described in detail with reference to the drawings.

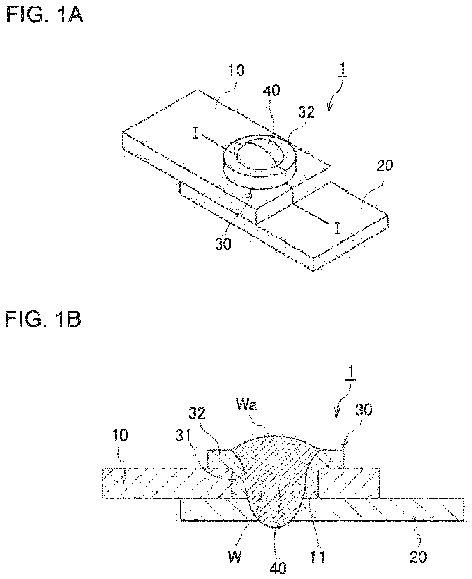

In the arc welding method for dissimilar material joining according to the embodiment, a dissimilar material welded joint 1 as shown in FIG. 1A and FIG. 1B is obtained by joining a top plate 10 (first plate) made of an aluminum alloy or a magnesium alloy and a bottom plate 20 (second plate) made of steel that are overlapped with each other, via a joining assist member 30 made of steel, by an arc welding method described later.

The joining assist member 30 having a height that is equal to or larger than the thickness of the top plate 10 is placed on the top plate 10, and a pressure is applied to the joining assist member 30 to punch the top plate 10, thereby forming a hole 11 in the top plate 10. The joining assist member 30 that is press-fitted by the punching process receives a pressure from an Al or Mg alloy material that is in the periphery of the hole 11, and is fixed in a state where the member is loosely restricted.

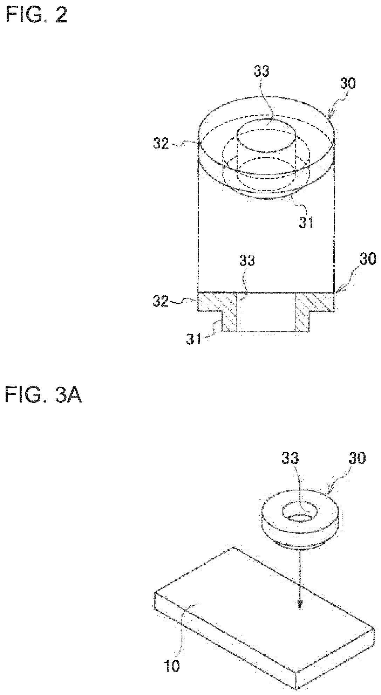

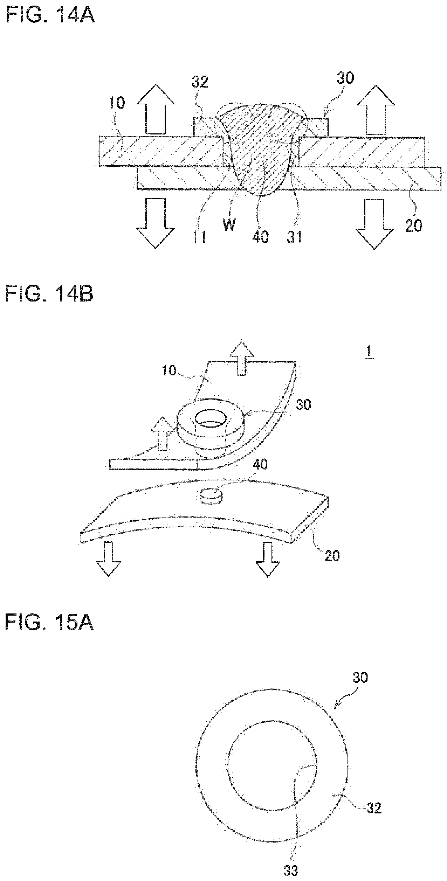

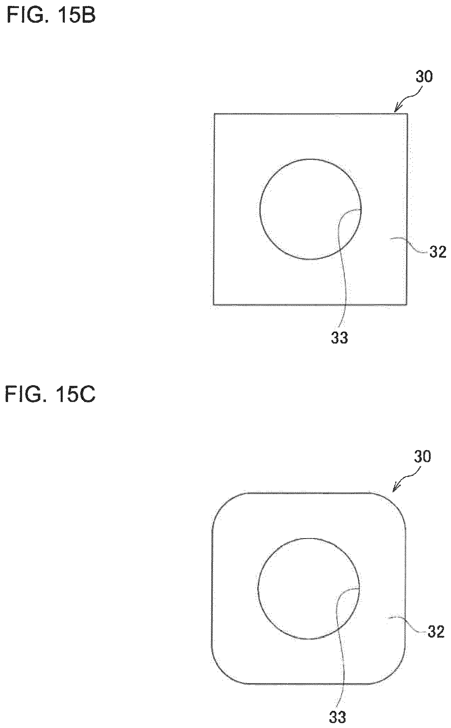

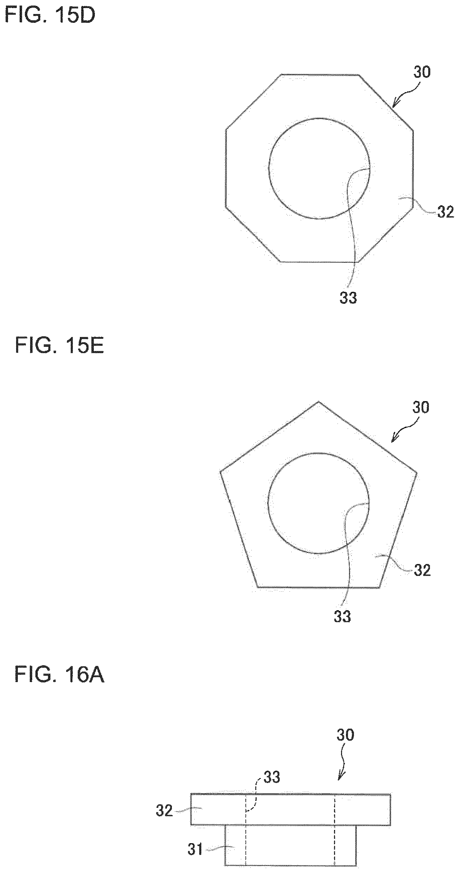

As shown in FIG. 2, the joining assist member 30 has a stepped external shape including a large-diameter portion 32 and a small-diameter portion 31 that is smaller in maximum outer diameter than the large-diameter portion 32. A hollow portion 33 penetrating the small-diameter portion 31 and the large-diameter portion 32 is formed in the joining assist member 30. The external shape of the large-diameter portion 32 is not limited to a circle as shown in FIG. 2 and FIG. 15A, and may be any shape as long as, after arc welding, the penetrating portion (hole 11) that is formed by the press fitting of the joining assist member 30 is closed. That is, the external shape may be a polygon of a rectangle or more as shown in FIG. 15B to FIG. 15E. Furthermore, the edges of the polygon may be rounded as shown in FIG. 15C.

The hollow portion 33 of the joining assist member 30 is filled with a weld metal 40 of an iron alloy or Ni alloy that is provided by melt of a filler material (welding material) by arc welding, and a melting portion W is formed from the weld metal 40 and a part of melted portions of the bottom plate 20 and the joining assist member 30.

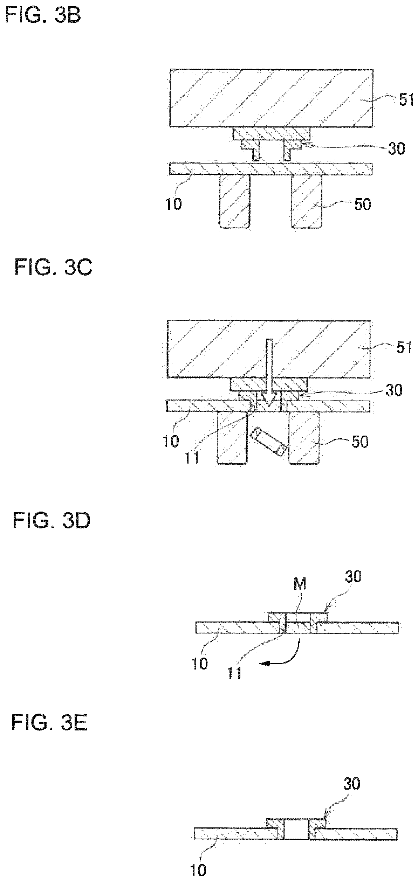

An arc welding method for dissimilar material joining for constructing the dissimilar material welded joint 1 is described below with reference to FIG. 3A to FIG. 3G.

As shown in FIG. 3A, first, the joining assist member 30 having a height that is equal to or larger than the thickness of the top plate (first plate) 10 is placed on the top plate 10, and a pressure is applied to the joining assist member 30 to punch the top plate 10, thereby press-fitting the joining assist member 30 into the top plate 10 while forming the hole 11 in the top plate 10 (step S1).

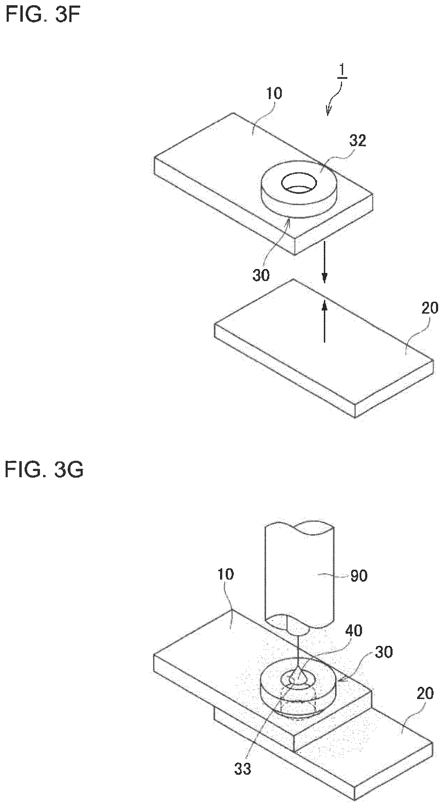

As shown in FIG. 3F, next, an overlapping work of overlapping the top plate 10 into which the joining assist member 30 is press-fitted, and the bottom plate 20 with each other is performed (step S2). Subsequently, as shown in FIG. 3G, the top plate 10 and the bottom plate 20 are joined to each other by performing, as described in detail later, any arc welding work of (a) a consumable-electrode gas-shielded arc welding method, (b) a non-gas arc welding method, (c) a gas tungsten arc welding method, (d) a plasma arc welding method, and (e) a coated arc welding method (step S3). FIG. 3G shows a case where the arc welding work is performed by (a) the consumable-electrode gas-shielded arc welding method.

In the punching work in step S1, the joining assist member 30 has the large-diameter portion 32 and the small-diameter portion 31, and the total height of the large-diameter portion 32 and the small-diameter portion 31 is equal to or larger than the thickness of the top plate 10. The joining assist member 30 is placed so that the small-diameter portion 31 of the joining assist member faces the top plate 10.

In a specific example of the punching work of step S1, as shown in FIG. 3B to FIG. 3E, an upper pedestal 51 to which the joining assist member 30 is fixed is approached to a lower pedestal 50 on which the top plate 10 is placed, and a punching process is performed while the joining assist member 30 itself is used as a punch. In this case, an occasion where a base material piece M remains to be in the hollow portion 33 rarely happens, and may interfere the arc welding. In the case, therefore, the base material piece M must be removed.

The arc welding work of step S3 is necessary to join the joining assist member 30 and the bottom plate 20 via a weld metal 40 in the hole 11 of the top plate 10 and to fill the hollow portion 33 of the joining assist member 30. It is therefore indispensable for the arc welding to insert a filler material (welding material). More specifically, the weld metal 40 is formed by melting the filler material by the following four arc welding methods.
(a) The consumable-electrode gas-shielded arc welding method, which is a welding method commonly called MAG or MIG, is a method in which a good welded portion is formed by using a solid wire or a flux-containing wire as a filler/arc generation consumable electrode and shielding the welded portion from the air by a shielding gas such as CO₂, Ar, or He.
(b) The non-gas arc welding method, which is also called a self-shielded arc welding method, is a means for forming a good welded portion using a special flux-containing wire as a filler/arc generation consumable electrode while dispensing with a shielding gas.
(c) The gas tungsten arc welding method is one kind of gas-shielded arc welding method but is of a non-consumable-electrode type, and is commonly called TIG. An inert gas such as Ar or He is used as a shielding gas. An arc is generated between a tungsten electrode and a base plate, and a filler wire is supplied to the arc from the side.
   Whereas in general no current is applied to the filler wire, there exists hot wire TIG in which the melting rate is increased by applying a current to the filler wire. In this case, no arc is generated from the filler wire.
(d) The plasma arc welding method, which is the same as the TIG in the principle, is a welding method in which the arc power is increased by tightening an arc by employing double gas supply systems and increasing the gas supply rate.
(e) The coated arc welding method is an arc welding method in which a coated arc welding rod in which a metal core wire is coated with flux is used as a filler. No shielding gas is necessary.

As for the filler material (welding material), common welding wires or welding rods can be employed as long as the weld metal 40 is to be an Fe alloy. An Ni alloy can also be used because it does not cause any problems in welding to iron.

More specifically, on the market are JIS standard materials such as (a) Z3312, Z3313, Z3317, Z3318, Z3321, Z3323, and Z3334, (b) Z3313, (c) Z3316, Z3321, and Z3334, and (d) Z3211, Z3221, Z3223, Z3224 and AWS (American Welding Society) standard materials such as (a) A5.9, A5.14, A5.18, A5.20, A5.22, A5.28, A5.29, and A5.34, (b) A5.20, (c) A5.9, A5.14, A5.18, and A5.28, and (d) A5.1, A5.4, A5.5, and A5.11.

The hollow portion 33 of the joining assist member 30 is filled with a filler material using the above arc welding methods. In general, it is not necessary to move the target position of the filler wire or welding rod. It is appropriate to finish welding by ending arc formation after a lapse of a proper supply time. However, in the case where hollow portion 33 has a large area, the target position of the filler wire or welding rod may be moved so as to form a circle in the hollow portion 33.

By the above steps of work, the top plate 10 made of an Al alloy or an Mg alloy and the bottom plate 20 made of steel are joined with high strength.

Roles of the steel joining assist member 30 that is used in the above-described arc welding method is described below.

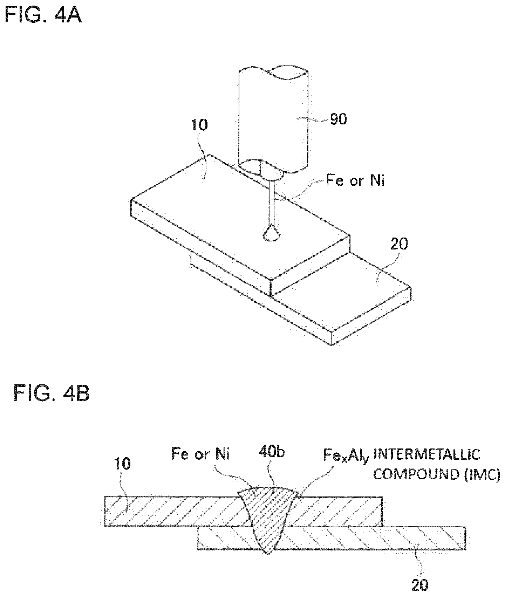

First, where as shown in FIG. 4A and FIG. 4B a top plate 10 made of aluminum is simply overlapped with a bottom plate 20 made of steel and arc spot welding is performed at a fixed point for a prescribed time from the top plate side using a welding wire made of steel or a nickel alloy, a weld metal 40a is formed that is an alloy of aluminum and steel or aluminum, steel, and nickel. Since this alloy has a large aluminum content, this alloy is in the form of intermetallic compounds (IMC) which are fragile.

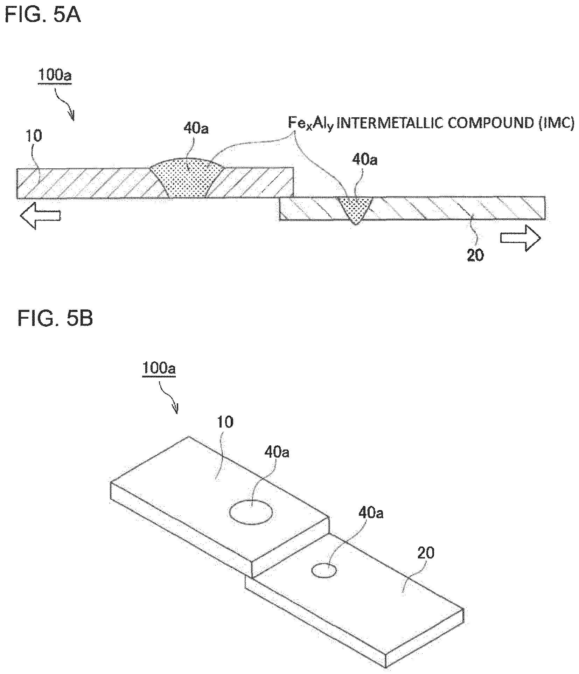

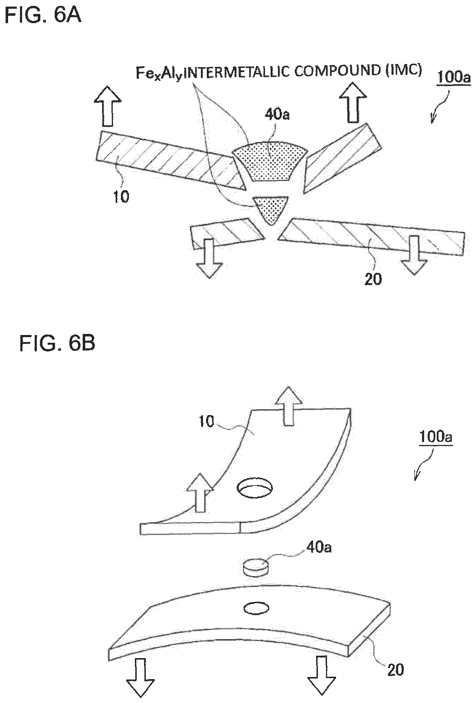

Although it appears that joining is made in such a dissimilar material welded joint 100a, the weld metal 40a is broken easily and disjoining occurs as shown in FIG. 5A and FIG. 5B when receiving tensile stress in a horizontal direction (shearing tension). Also when receiving tensile stress in the vertical direction (peeling tension), as shown in FIG. 6A and FIG. 6B, the weld metal 40a is broken or the interface portion between the weld metal 40a and the top plate 10 or the interface portion between the weld metal 40a and the bottom plate 20 is broken and disjoining occurs like the top plate 10 comes off.

As described above, in the case where the top plate 10 made of aluminum and the bottom plate 20 made of steel are simply overlapped and they are subjected to penetration welding, the entire weld metal 40a becomes intermetallic compounds and hence is vulnerable to both shearing tension and peeling tension. As such, this dissimilar material welded joint is not suitable for practical use.

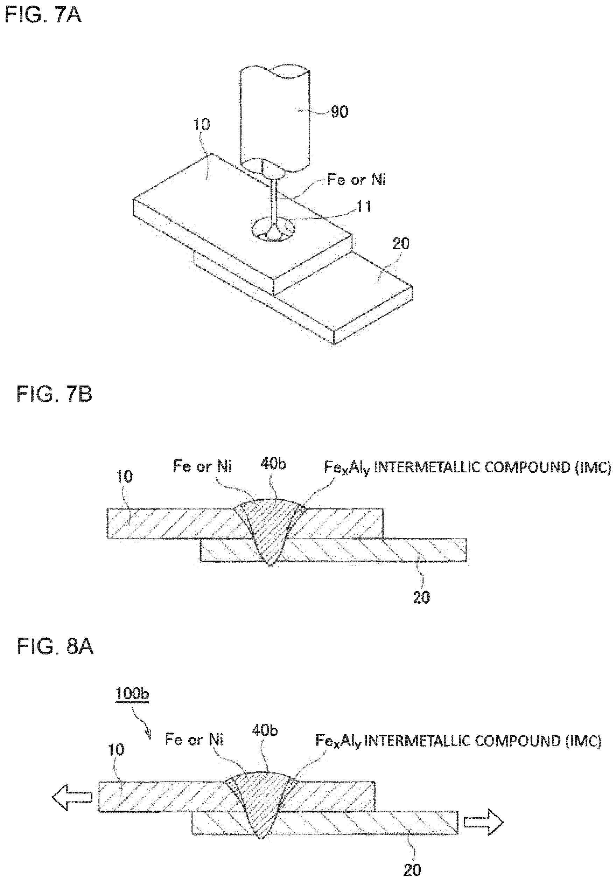

As shown in FIG. 7A and FIG. 7B, another method is conceivable in which a hole 11 having a proper size is made through a top plate 10 and a molten welding material made of steel or a nickel alloy is applied so as to fill up the hole 11.

In this case, since a weld metal 40b formed from the welding material and steel that is the bottom plate 20 in an initial stage of welding does not contain molten aluminum, no intermetallic compounds are formed and the weld metal 40b is high in strength and toughness and is strongly connected to the bottom plate 20. Furthermore, a weld metal 40b formed inside the hole 11 of the top plate 10 contains very small amount of molten aluminum. Generation of intermetallic compounds much is thus suppressed, and in particular, its central portion is robust.

However, an intermetallic compound layer of aluminum and steel or aluminum and nickel is formed in the vicinity of the hole 11 of the top plate 10. When shearing tensile stress acts on such a dissimilar material welded joint 100b as shown in FIG. 8A, the bottom plate side withstands strong stress because of the strong metallic bonding. On the other hand, on the top plate side, although intermetallic compounds are formed around the hole 11, the base plates of the top plate 10 and the bottom plate 20 are deformed in an initial stage because they cannot be moved by peeling at the intermetallic compounds because of their shape.

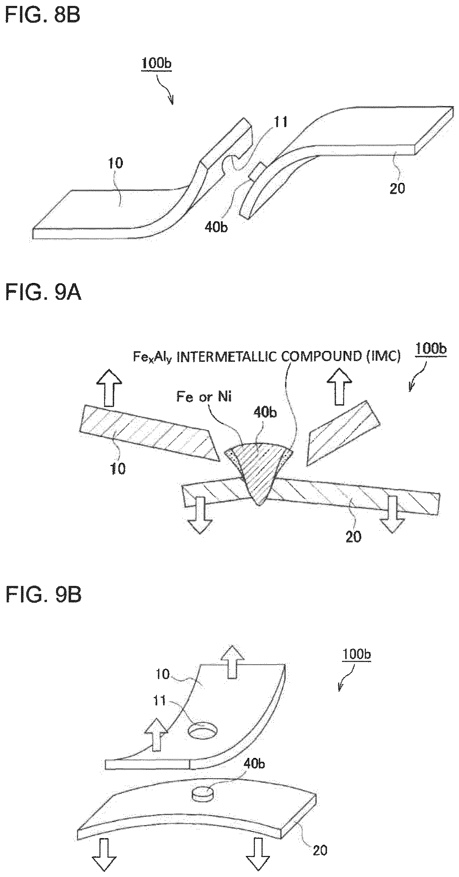

Thus, the deformation ability is improved compared with the case of the dissimilar material welded joint 100a shown in FIG. 5A and FIG. 5B in which a brittle fracture occurs with almost no deformation. However, when the base plates are deformed further and the joining portion is inclined by close to 90°, as shown in FIG. 8B, the state as in the case of reception of vertical peeling stress is established. When this state occurs, the intermetallic compounds formed around the hole 11 peel off and the top plate 10 comes off easily from the joining portion. That is, the improvement is insufficient.

As shown in FIG. 9A and FIG. 9B, the same result naturally occurs in a vertical tension test.

In view of the problems of the above-described two dissimilar material welded joints 100a and 100b, further improvements to withstand stress in the shearing direction and stress in the vertical peeling direction are made in the embodiment.

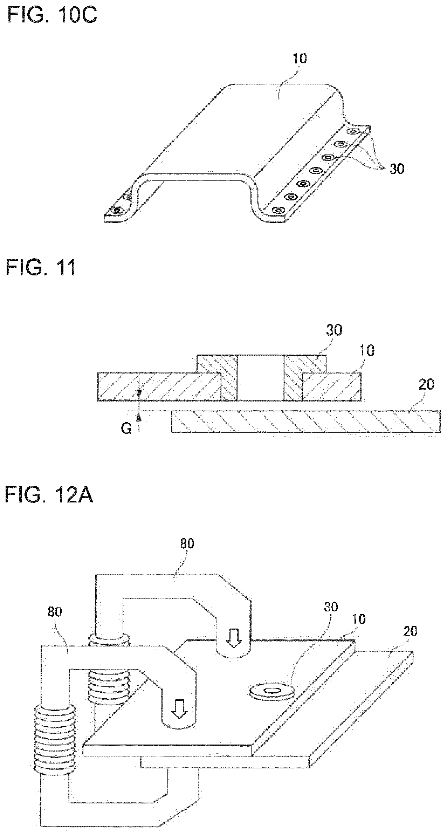

That is, as shown in FIG. 3A to FIG. 3D, the steel-made joining assist member 30 having a hole formed in the center is press-fitted into an aluminum plate that is to be the top plate 10. Since the joining assist member 30 has a height that is equal to or larger than the thickness of the top plate 10, the aluminum plate in the portion into which the joining assist member 30 is press-fitted causes burn-through (step S1: the punching step). Moreover, the joining assist member 30 receives a pressure from the aluminum plate in the periphery, and is fixed in a state where the member is loosely restricted (see FIG. 10C).

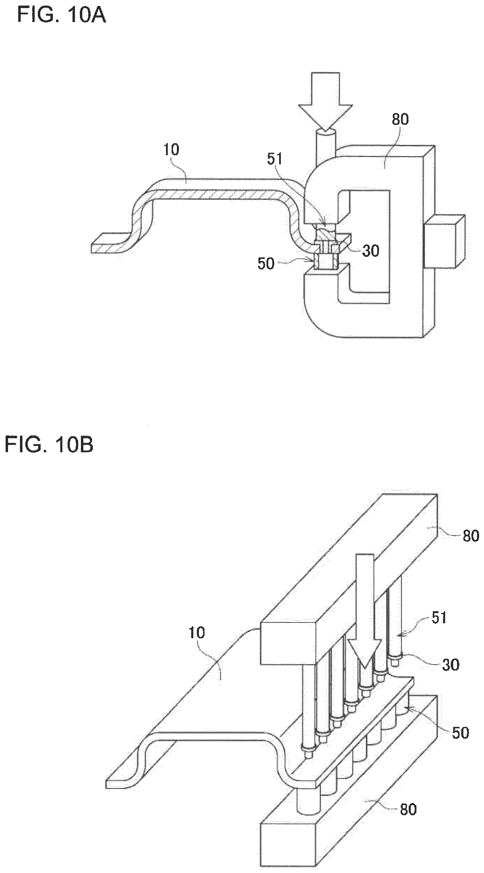

As shown in FIG. 10A or FIG. 10B, for example, a press-fitting apparatus for press-fitting the joining assist member 30 into the top plate 10 includes the upper pedestal 51 for pressing the joining assist member 30 into the top plate 10, a pressing mechanism 80 for moving the upper pedestal, and the lower pedestal 50 for receiving the rear side of the top plate 10. FIG. 10A shows a press-fitting apparatus for press-fitting the joining assist member 30 one by one, and FIG. 10B shows a press-fitting apparatus for simultaneously press-fitting a plurality of joining assist members 30.

The upper pedestal 51 and the joining assist member 30 are temporarily held by, for example, a magnetic force or a mechanical mechanism. After completion of the press fitting, the upper pedestal 51 is pulled up in the direction opposite to the pressing direction (the arrow in FIG. 10A or FIG. 10B), thereby enabling the joining assist member 30 to separate. As shown in FIG. 3B and FIG. 3C, the lower pedestal 50 has the hollow portion that is equal to or larger than the insertion diameter of the joining assist member 30, and can accumulate or eliminate an unwanted part of the Al or Mg alloy that is punched out by the press fitting. A suction mechanism using a negative pressure may be disposed.

The pair of mechanisms (the upper pedestal 51 and the lower pedestal 50) may be singly configured as an apparatus, or configured as an apparatus having a mechanism that simultaneously drives a plurality of pairs. They may be formed as a stationary type, or provided to an industrial articulated robot so that they can freely change location.

In the next step, the Al or Mg alloy-made top plate 10 to which the joining assist member 30 is temporarily fixed, and the steel-made bottom plate 20 are overlapped with each other at a position where they are to be joined together (step S2: the overlapping step). At this time, it is preferable that the top plate 10 to which the joining assist member 30 is temporarily fixed, and the bottom plate 20 are contacted with each other as closely as possible.

This is because, in the case where there is a gap G between the top plate 10 and the bottom plate 20 as shown in FIG. 11, even when the top plate 10 and the bottom plate 20 are welded together in a subsequent step, the top plate 10 is in a state where it can freely move at a degree corresponding to the gap between it and the bottom plate 20, and the joining accuracy is impaired (rattling occurs).

In the case where the close contactness between the top plate 10 and the bottom plate 20 is ensured even when the pressing is not performed, the pressing mechanism is not always necessary in the filling and welding step, but preferably the top plate 10 and the bottom plate 20 are pressurized in the filling and welding step in a direction along which they are closely contacted with each other.

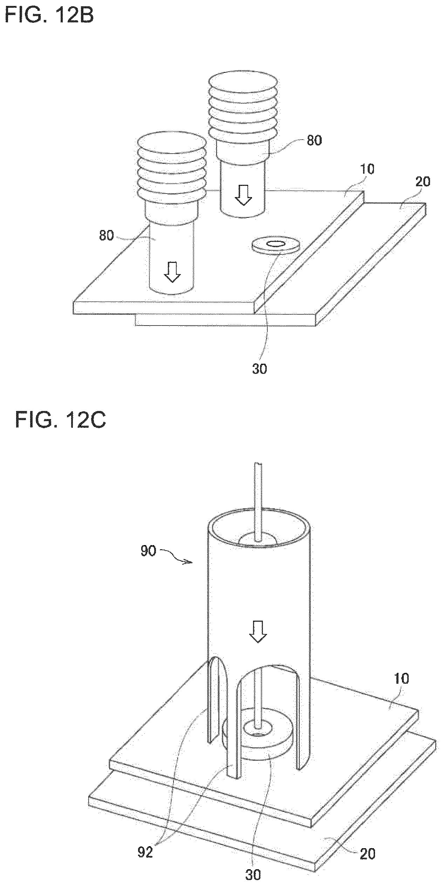

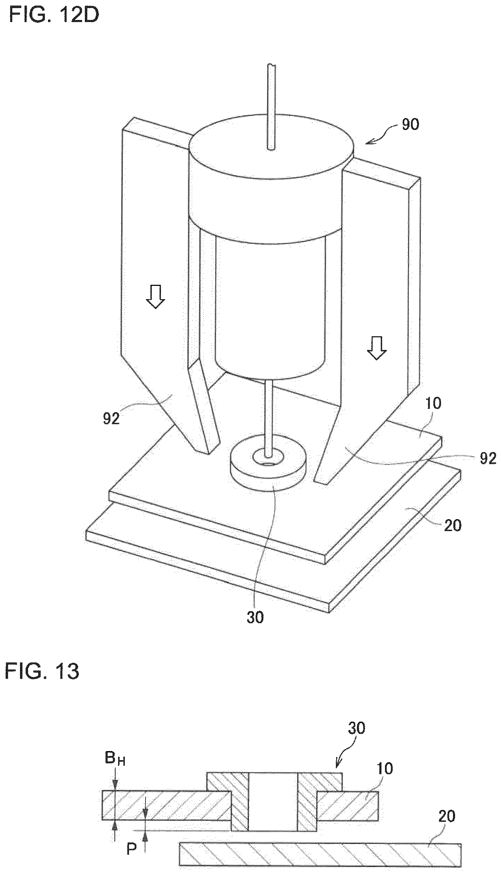

Specifically, the case where the pressing is vertically performed by using clamping mechanisms functioning as the pressing mechanisms 80 (see FIG. 12A), or that the case where the pressing is performed from one side (see FIG. 12B) are exemplified. In another example, pressing legs 92 are provided in a welding torch 90, and the pressing is performed by a force of a robot or the like (see FIG. 12C or FIG. 12D).

In a view point similar to the case where there is the gap G between the top plate 10 and the bottom plate 20, in the case where the joining assist member 30 punches the top plate 10, as shown in FIG. 13, the smaller the protrusion amount P of the small-diameter portion 31 of the joining assist member 30 from the top plate 10, the better. When the protrusion amount P is large, rattling may be caused after the filling and welding step. Specifically, the protrusion amount P is preferably 25% or less of the thickness B_{H} of the top plate 10 (however, 0% or more in order to surely punch through the top plate 10). More preferably,

the amount is 10% or less, and further preferably 5% or less.

After the preparation before welding is completed in this way, the weld metal 40 is formed by arc welding so as to fill the inside of the hollow portion 33 of the joining assist member 30. The target position of the tip end of the arc welding wire or rod is not the joining assist member 30, but the steel-made bottom plate 20 that is in contact with the bottom surface in the hole 11 of the top plate 10. In other words, the "crucible-like" space enclosed by the wall in the hollow portion 33 of the joining assist member 30, and the bottom plate 20 is in a state where casting is performed by arc welding. This produces a state where, in the cross section, the joining assist member 30, the weld metal 40, and the bottom plate 20 are weld-joined by strong metallic bonding. The large-diameter portion 32 of the joining assist member 30 that is larger in width than the hole diameter formed by the punching process with the tip end portion (small-diameter portion 31) of the joining assist member 30 is located to be nearly flush with or outside the surface of the top plate 10. The most important role of the large-diameter portion 32 is resistance to vertical peeling stress. As shown in FIG. 14A, when the joining assist member 30 that has the large-diameter portion 32 in the outer side is applied, a phenomenon that the interface between the top plate 10 and the weld metal 40 is peeled off and dropping is caused can be prevented from occurring. As shown in FIG. 14B, in general, the weld metal 40 fractures after sufficient plastic deformation. It is obvious that the joining assist member 30 does not adversely affect tensile stress in the shearing direction, and initial stress.

The external shape of the large-diameter portion 32 of the joining assist member 30 may be any shape on the mechanism as long as the portion closes the hole 11 that is formed by punching due to press fitting, after welding. For example, the most common shape is a circle as shown in FIG. 15A, but the external shape may be a polygon of a rectangle or more as shown in FIG. 15B to FIG. 15E. The edges of the polygon may be rounded as shown in FIG. 15C.

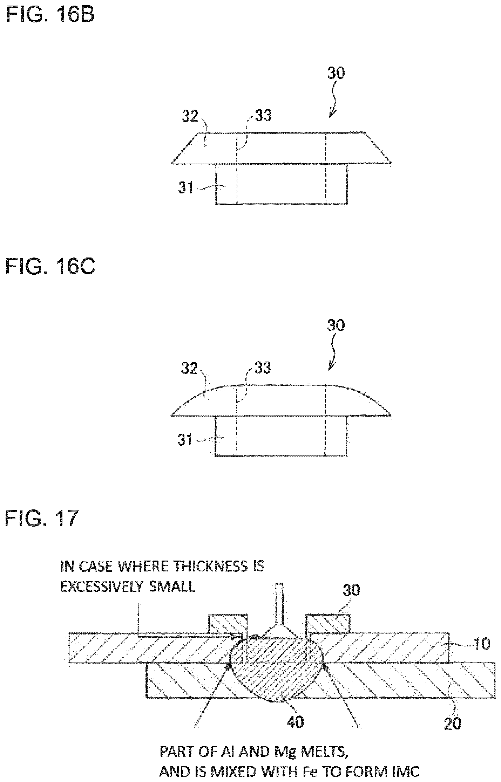

The section shape of the large-diameter portion 32 of the joining assist member 30 is not limited to a flat columnar shape as shown in FIG. 16A. For example, the shape may be a shape in which the upper side (the side opposite to the small-diameter portion 31) is provided with a taper shape as shown in FIG. 16B, or a shape in which the upper side is rounded as shown in FIG. 16C, and not particularly limited.

The joining assist member 30 increases strength to external stress in the thickness direction (three-dimensional direction) as the area is larger and the thickness is larger, and therefore this is preferred. When the joining assist member is larger than necessary, however, it may cause the weight to increase, or the protrusion amount from the surface of the top plate 10 to be excessively large. Therefore, the aesthetic appearance is deteriorated, or interference with other adjacent members occurs. Thus, the size should be determined so as to satisfy design requirements.

The joining assist member 30 has several other roles. One of the roles is a protective wall action for preventing the Al or Mg alloy that is material of the top plate 10, from melting. When an arc impinges on the Al or Mg alloy that has a low melting point, the alloy melts because of the high temperature of the arc. However, the interposition of the joining assist member 30 physically prevents the arc from impinging on the Al or Mg alloy. Therefore, the alloy can be prevented from melting.

Moreover, the temperature of the weld metal 40 that is formed by an arc is high, and therefore there may arise a case where the weld metal erodes the contacting Al or Mg alloy. Therefore, it is preferred that the joining assist member 30 is interposed also during arc welding. That is, it is preferred that, after arc welding is ended, the small-diameter portion 31 of the joining assist member 30 remains between the weld metal 40 and the top plate 10.

When the penetration range of arc welding extends only over the joining assist member 30 and the bottom plate 20, dilution of Al or Mg into the weld metal 40 is zero, and IMCs are completely prevented from being produced. When the radial thickness of the joining assist member 30 is excessively small as shown in FIG. 17, there is a possibility that the heat input during arc welding may cause the joining assist member 30 to reach the melting point and melt. In this case, there is a further possibility that also the Al or Mg alloy may melt. Therefore, an adequate thickness must be designed in view of the heat input.

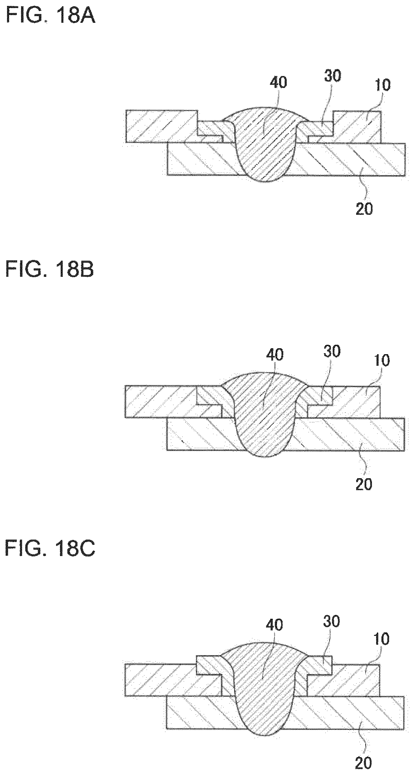

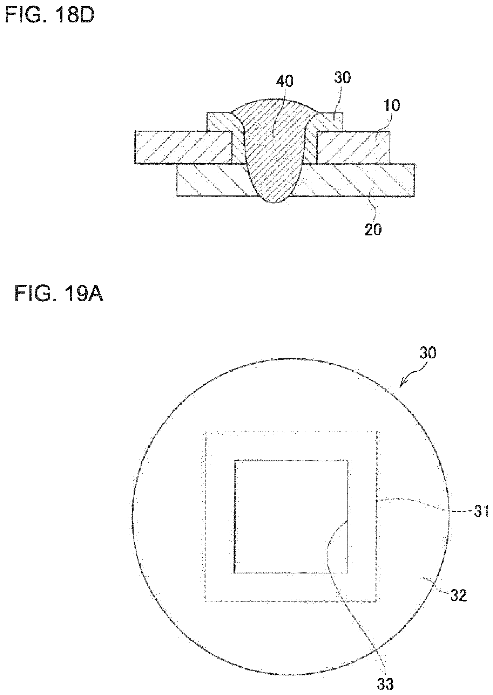

The pushing amount of the joining assist member 30 into the top plate 10 is not particularly limited. However, in the case where the joining portion is recessed from the surface of the top plate 10 as shown in FIG. 18A, when stress is applied to the welded joint, the weld metal 40 becomes a stress concentration part, and there is a possibility that breakage may occur at a low intensity. Therefore, a state where at least the surfaces of the top plate 10 and the joining assist member 30 are flush with each other as shown in FIG. 18B, or a state where the large-diameter portion 32 of the joining assist member 30 is partly protruded from the surface of the top plate 10 as shown in FIG. 18C is preferable. Moreover, a state where the large-diameter portion 32 of the joining assist member 30 is completely protruded from the surface of the top plate 10 as shown in FIG. 18D is most preferable.

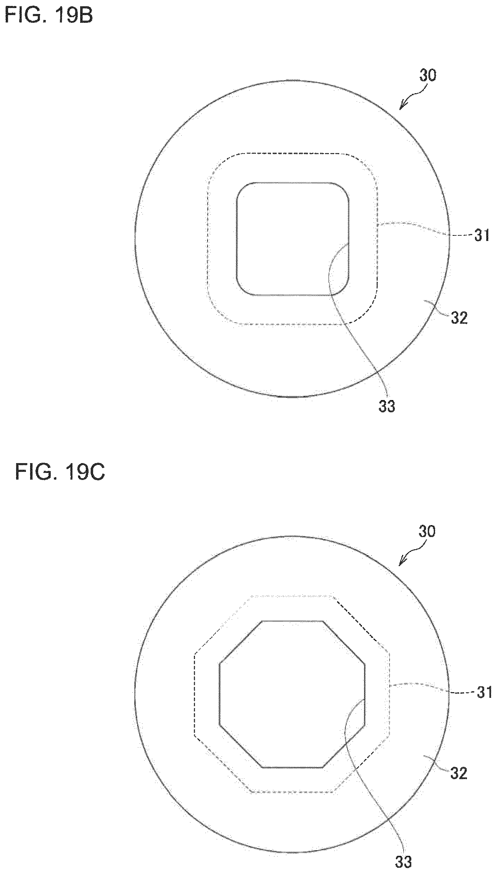

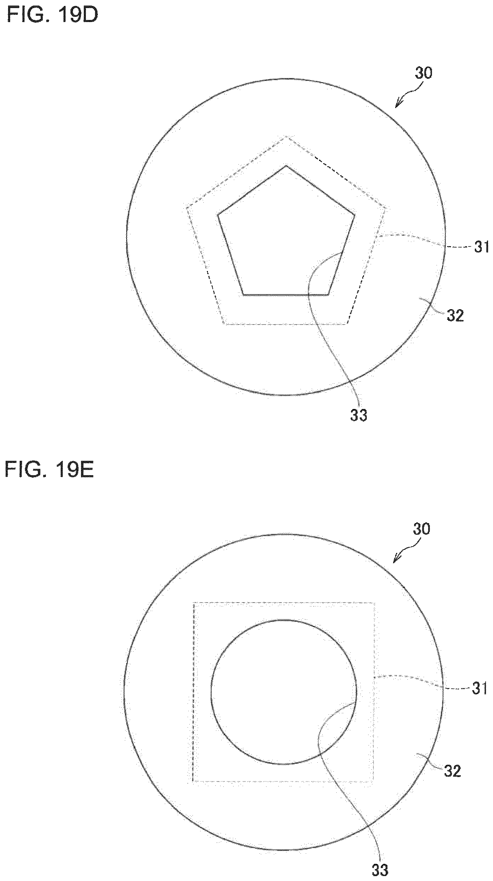

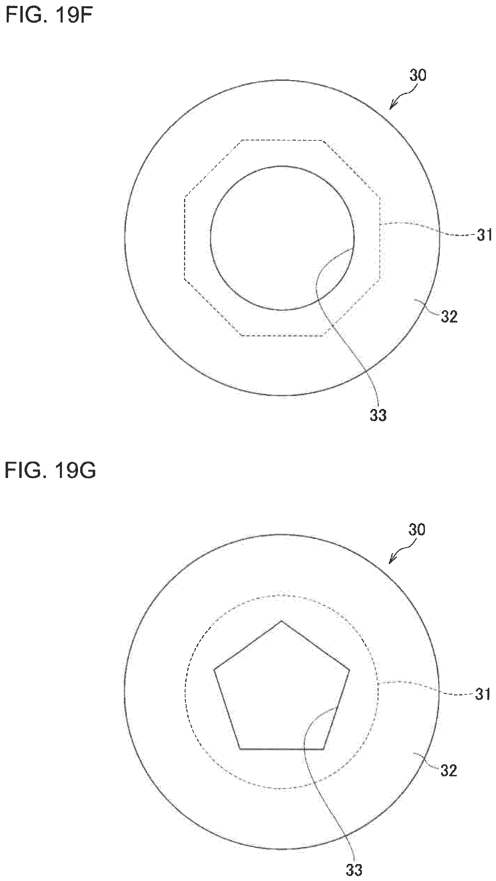

As the most common shape of the section shape of the small-diameter portion 31 of the joining assist member 30, the true circular shape is used as shown in FIG. 2. However, the section shape is not particularly limited, and may be an arbitrary shape. For example, the section shape may be a polygon of a rectangle or more as shown in FIG. 19A to FIG. 19F. The edges of the polygon may be rounded as shown in FIG. 19B. In a similar manner as described above, furthermore, also the inner surface shape of the hollow portion 33 of the joining assist member 30 is not necessarily to be the true circle, and may be an arbitrary shape as shown in FIG. 19A to FIG. 19E or 19G. It is not necessary that the section shape of the small-diameter portion 31, and the inner surface shape of the hollow portion are identical with each other as shown in FIG. 19A to FIG. 19D. The shapes may be different from each other as shown in FIG. 19F and FIG.19G.

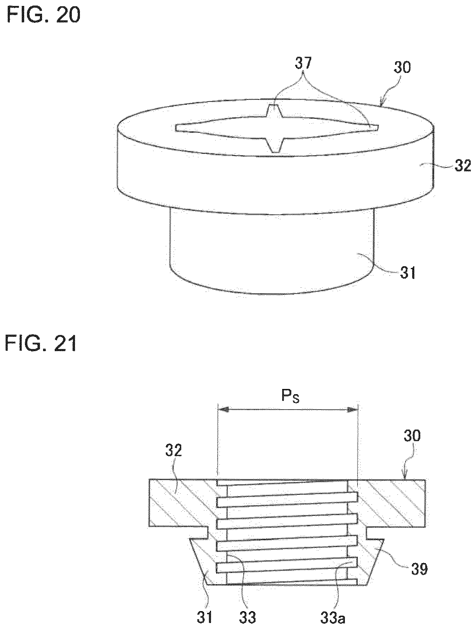

When the joining assist member 30 is press-fitted into the top plate 10 to punch the plate, a pressure may be applied to the joining assist member 30 while turning the joining assist member. In the case where such means is employed, a configuration where notches 37 into which a screw driver can be fitted are disposed in the upper surface of the large-diameter portion 32 as shown in FIG. 20 enables the joining assist member 30 to be easily turned and inserted into the top plate 10.

The surface of the hollow portion 33 formed in the joining assist member 30 may be flat. However, a groove of screw 33a may be formed as shown in FIG. 21. In this method, although a male screw is not used, the contact area to the molten pool is increased by the groove of screw 33a when arc-welded. Thus, the weld metal 40 and the joining assist member 30 are bonded more strongly. In the case of having a non-flat surface where the groove of screw 33a or the like is provided, the diameter Pₛ is defined as the largest distance between confronting portions.

There are no particular limitations on the specific material of the steel joining assist member 30 made of steel except that it should be pure iron or an iron alloy. Specific examples include soft steel, carbon steel, and stainless steel.

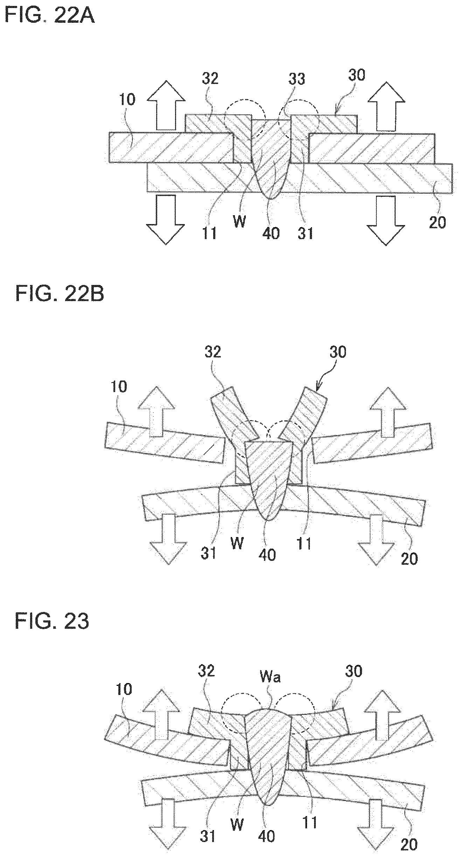

It is desirable that the hollow portion 33 of the joining assist member 30 is filled with the weld metal 40, and, furthermore, an excess weld metal Wa is formed on the surface of the joining assist member 30, more specifically, that the surface of the large-diameter portion 32 (see FIG. 1B). In a state where the excess weld metal Wa is not formed, that is, the hollow portion 33 remains in appearance after welding as shown in FIG. 22A, there is a possibility that the joining strength may be insufficient particularly for external stress in the thickness direction (three-dimensional direction) (see FIG. 22B). As shown in FIG. 23, therefore, formation of the excess weld metal Wa suppresses deformation of the joining assist member 30 and provides high joining strength when external stress is received in the thickness direction (three-dimensional direction). In order to surely fix the joining assist member 30 to the top plate 10 against tensile stress in the thickness direction, the maximum outer diameter of the excess weld metal Wa in the case where the excess weld metal Wa is viewed from the upper side in the thickness direction (the top plate 10 side) is preferably set to be larger than the maximum outer diameter of the hole 11 disposed in the top plate 10.

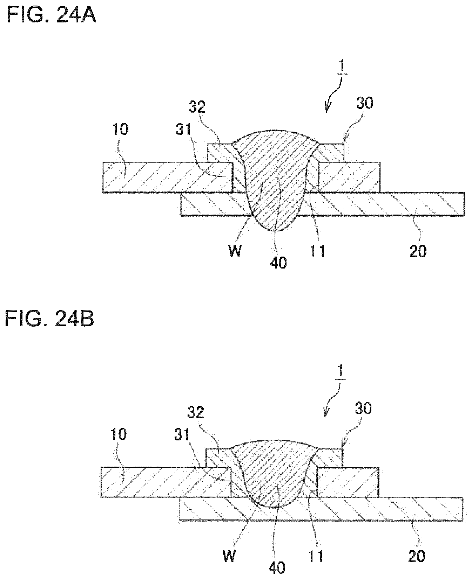

On the other hand, as for the weld penetration on the side opposite to the side of the excess weld metal, a state must be formed where, as shown in FIG. 24A, the weld metal 40 is formed to exceed the thickness of the bottom plate 20, that is, a so-called penetration bead is formed. The reason of this is as follows.

There may be a state where the weld penetration is shallow because of a failure in setting the welding conditions or a malfunction of a welding apparatus, the bottom plate 20 does not melt, and the weld metal 40 is simply placed thereon despite of a normal appearance of the excess weld metal Wa that is formed on the joining assist member 30 on the surface side. In such a case, the joining assist member 30 and the bottom plate 20 are not joined to each other, that is, also the bottom plate 20 and the top plate 10 are not joined to each other.

On the other hand, in the case where a penetration bead is formed on the bottom plate 20, this means that the weld metal 40 passes through the joining surfaces from the side of the top plate 10, and reaches the side of the bottom plate 20, and therefore guarantees that the joining assist member 30 and the bottom plate 20 are metal-bonded together. This further guarantees that the top plate 10 and the bottom plate 20 are indirectly joined to each other. When a penetration bead is formed on the bottom plate 20, the penetration bead can be easily checked visually or by using a sensor or the like immediately after the welding step, and therefore a situation where the process proceeds to the next step while leaving the joining failure as it is can be prevented.

Moreover, the joining strength between the joining assist member 30 and the bottom plate 20 can be approximately expected based on the size of the penetration bead formed on the bottom plate 20. In the case where the materials to be used are constant, the joining strength between them is proportional to the size of the sectional area of the weld metal 40 that is formed in the interface between the top plate 10 and the bottom plate 20, i.e., the nugget diameter. The nugget diameter can be estimated as a section of a bilaterally symmetric trapezoid that is obtained by assuming that the hollow portion 33 disposed in the joining assist member 30 is filled with the weld metal 40, and setting the diameter (maximum outer diameter) of the weld metal 40 formed on the side of the upper face (the side of the large-diameter portion 32) of the hollow portion 33 as the upper base, and the diameter (maximum outer diameter) of the penetration bead as the lower base. That is, the nugget diameter is approximately proportional to the diameter of a penetration bead. When this relationship is used, a high-level quality assurance that is not based on the two-option syntax, i.e., whether joined or not joined, but based on whether joined with satisfying the necessary strength or not can be performed from a measurement of the size of a penetration bead on the bottom plate 20. In view of the quality assurance, it is essential that the weld metal 40 is melted until a penetration bead is formed on the outer side of the bottom plate 20, and the bottom plate 20 and the joining assist member 30 are welded together.

However, the welding process must be performed so as to prevent a situation where the weld metal 40 melts to an excessive depth, and the weld metal 40 and the bottom plate 20 cause burn-through.

In the case where, as shown in FIG. 24B, the weld metal 40 melts into the bottom plate 20 at an adequate degree, but a penetration bead is not formed on the bottom plate 20, the detection for the above-described quality assurance cannot be performed, and therefore this is not preferred.

Then, preferred embodiments of the joining assist member 30 that is used in the above-described arc welding method is described.

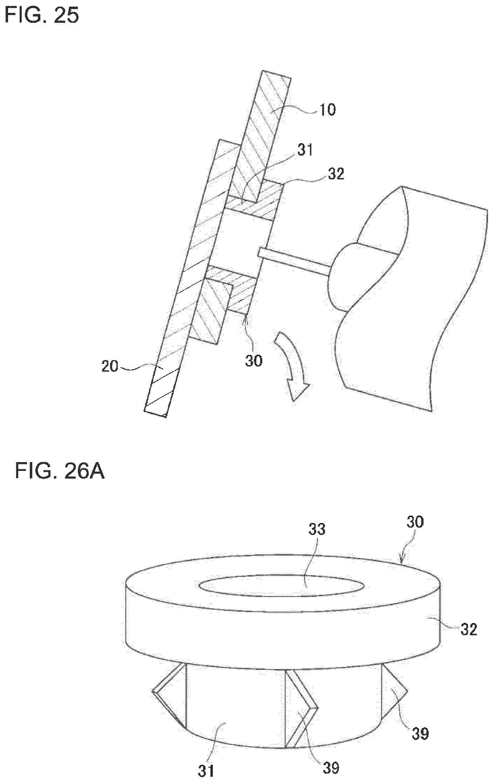

As described above, in the punching step (step S1), at the same time when the joining assist member 30 is pressed and the top plate 10 is punched, the joining assist member 30 can be temporarily restricted and held to the top plate 10. When vibration is applied before the welding step, or when an overhead position (see FIG. 25) is taken, however, the joining assist member may be sometimes caused to slip off because of the weak restricting and holding force.

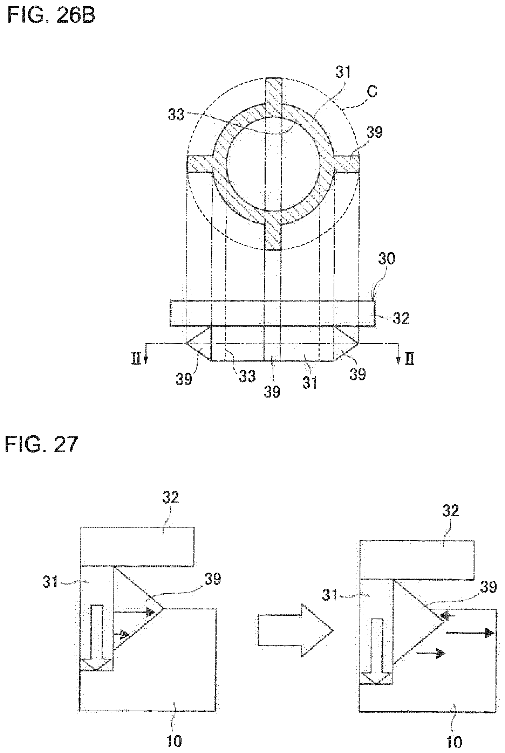

In order to prevent this problem, and surely hold the joining assist member 30 to the top plate 10 until the arc welding step (step S3), means for enhancing the force of holding the joining assist member 30 is effective. Specifically, the means is realized by forming the joining assist member 30 into an appearance shape that can exert a caulking mechanism after the press fitting. As one of the means, as shown in FIG. 26A and FIG. 26B, at least one (four in the embodiment) press-fitting protrusions 39 that are formed into a vane-like shape are disposed on the outer peripheral surface of the small-diameter portion 31 of the joining assist member 30.

FIG. 27 is a view for description of a holding mechanism in the case where the joining assist member 30 having the press-fitting protrusions 39 is to be press-fitted into the top plate 10. When the joining assist member 30 is to be press-fitted into the top plate 10, as shown in FIG. 27, the top plate 10 that is contacted with the joining assist member 30 is elastically deformed in a direction along which the top plate is pressed and expanded, and then plastically deformed. After the tip end parts of the press-fitting protrusions 39 pass over, the elastically deformed portion returns to the original position. That is, a flow of the Al or Mg alloy that is the material of the top plate 10 occurs, and causes a barrier against a force that pushes back the joining assist member 30. Therefore, the joining assist member 30 is not easily disengaged.

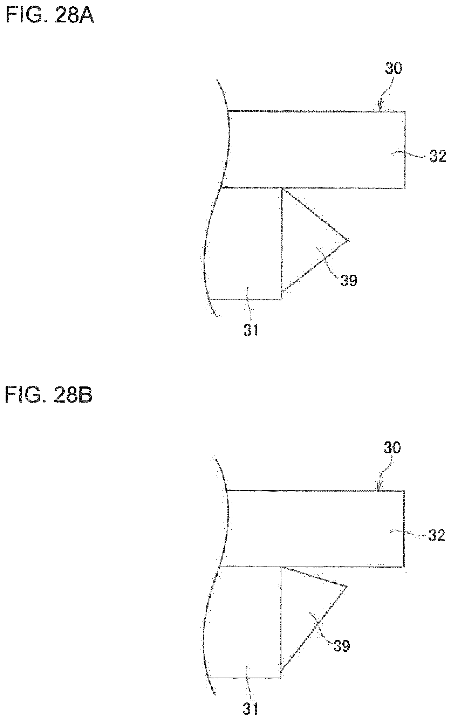

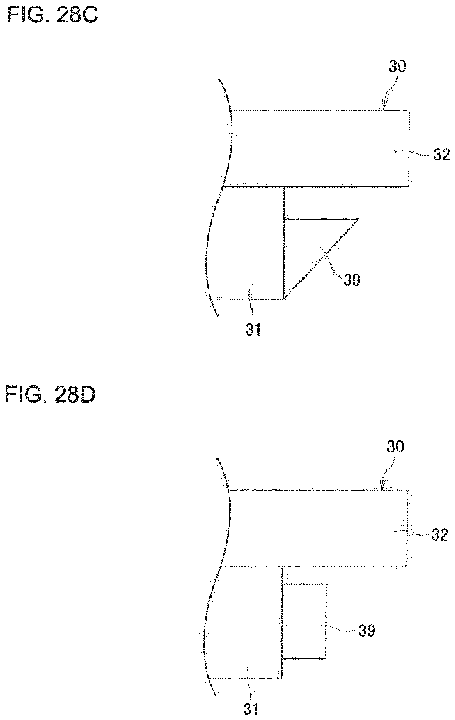

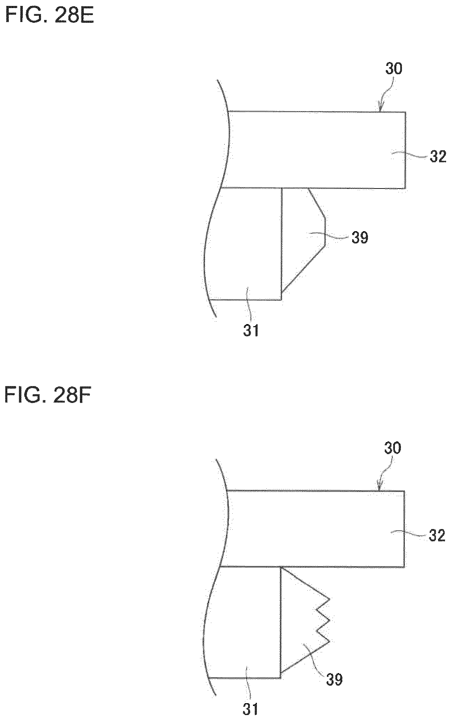

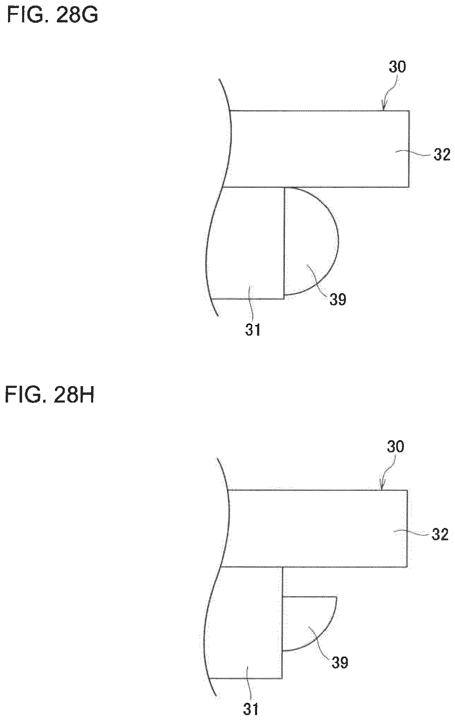

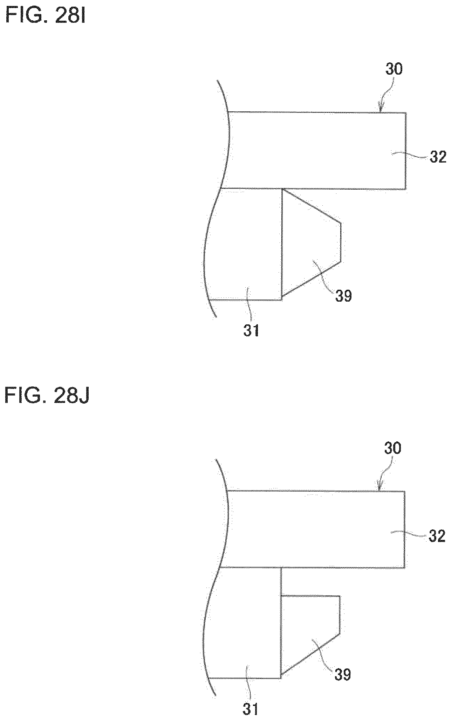

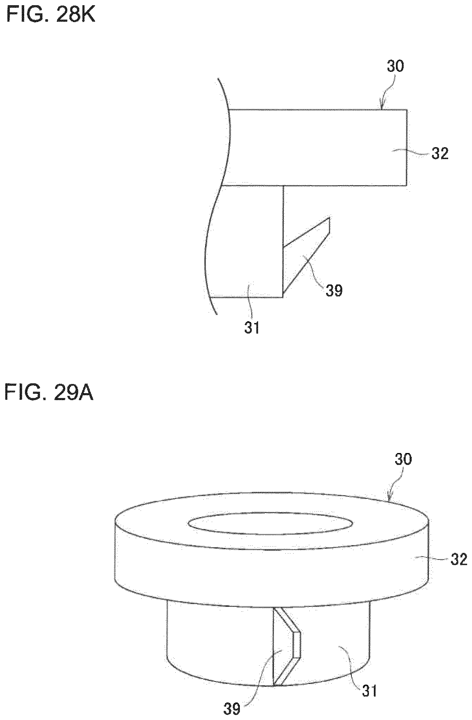

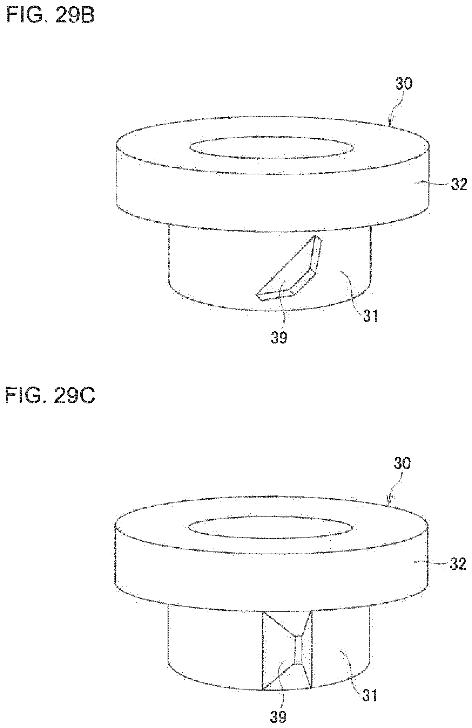

The shape of the press-fitting protrusions 39 may be an isosceles triangle as shown in FIG. 28A. Typically, however, the shape is a deformed triangle, a right triangle, a rectangle, an indefinite shape, a saw-tooth shape, a semicircle, a quadrant, a symmetric trapezoid, an asymmetric trapezoid, a crochet shape, or the like as shown in FIG. 28B to FIG. 28K, and not limited. Since the press-fitting protrusions 39 are connected also to the bottom surface of the large-diameter portion 32, the strength of the press-fitting protrusions 39 can be enhanced. The press-fitting protrusions 39 may be parallel to the axial direction of the small-diameter portion 31 as shown in FIG. 29A, or inclined with respect to the axial direction as shown in FIG. 29B. In this case, the press fitting is preferably performed while rotating the joining assist member 30. As shown in FIG. 29C, the press-fitting protrusions 39 may have a mountain-like shape in which the circumferential width is reduced as advancing from the base portion toward the tip end portion. Preferably, the positions of the press-fitting protrusions 39 are separated from the large-diameter portion 32 in order to dispose a space for the metal flow.

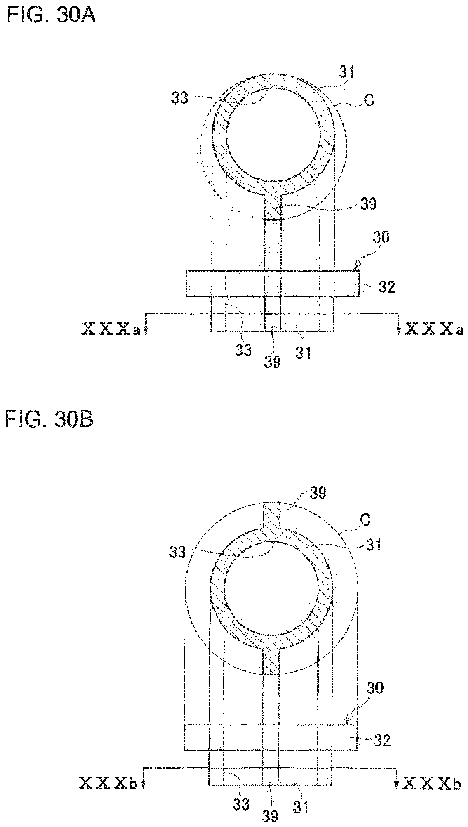

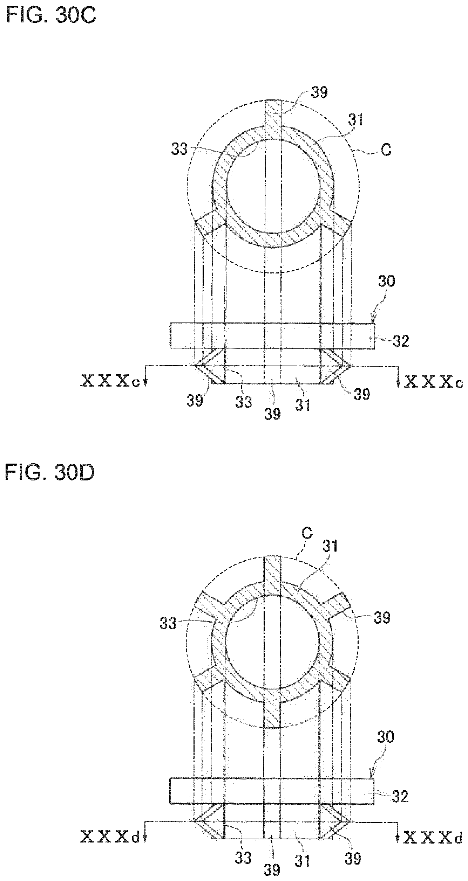

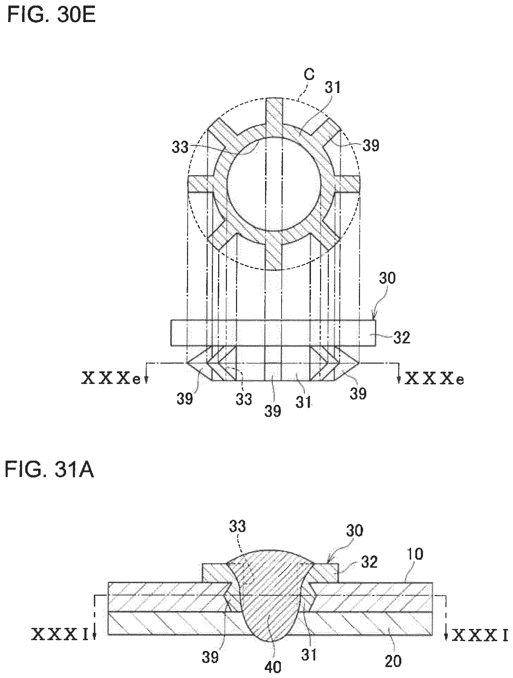

The number of the press-fitting protrusions 39 is not limited to four that is shown in FIG. 26B, it is requested to dispose at least one portion, and the upper limit is not particularly set. As shown in FIG. 30A to FIG. 30E, one, two, three, six, or eight press-fitting protrusions 39 may be disposed. When the number of the press-fitting protrusions 39 is increased, a pressure that is required to punch through the top plate 10 by using the joining assist member 30 is raised, and therefore the number of the press-fitting protrusions 39 should not be increased more than necessary. Preferably, the number of the press-fitting protrusions 39 is eight or less.

Also in the case where, as shown in FIG. 26B and FIG. 30B to 30E, the diameter of the maximum circle C that is in contact with the maximum outer diameter portions of at least two press-fitting protrusions 39, or, as shown in FIG. 30A, the diameter of the maximum circle C that is in contact with the maximum outer diameter portion of one press-fitting protrusion 39, and the outer peripheral surface of the small-diameter portion 31 is excessively large, a pressure that is required to punch through the top plate 10 is raised. Therefore, the protrusion amount of the press-fitting protrusions 39 from the outer peripheral surface of the small-diameter portion 31 should not be increased more than necessary.

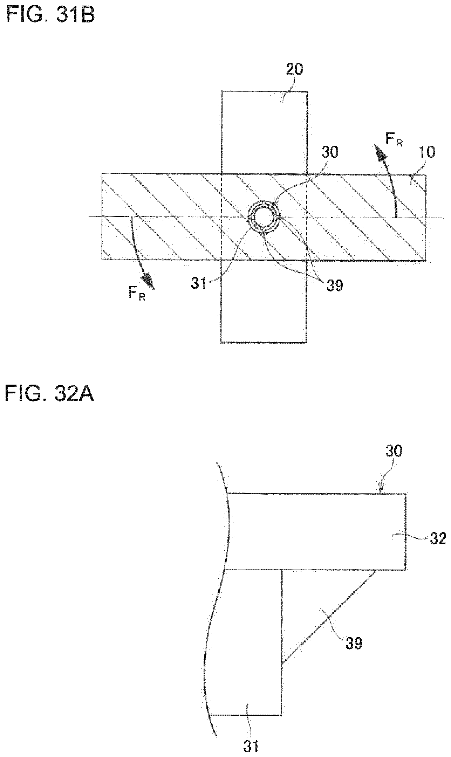

The configuration where the press-fitting protrusions 39 are disposed on the small-diameter portion 31 of the joining assist member 30 has another advantage. A second effect is that the top plate 10 and bottom plate 20 that are joining objects hardly relatively rotate. In the case where the section shape of the small-diameter portion 31 of the joining assist member 30 is the true circle, and the members to be joined (the top plate 10 and the bottom plate 20) are joined to each other by using only the present joining method, when a strong horizontal rotation force F_{R} acts on, for example, the top plate 10, there is a possibility that the top plate 10 rotates so as to turn about the joining assist member 30. As shown in FIG. 31A and FIG. 31B, however, the press-fitting protrusions 39 are disposed on the joining assist member 30, and the press-fitting protrusions 39 bite in the periphery of the hole 11 of the top plate 10, whereby the rotation can be easily prevented .

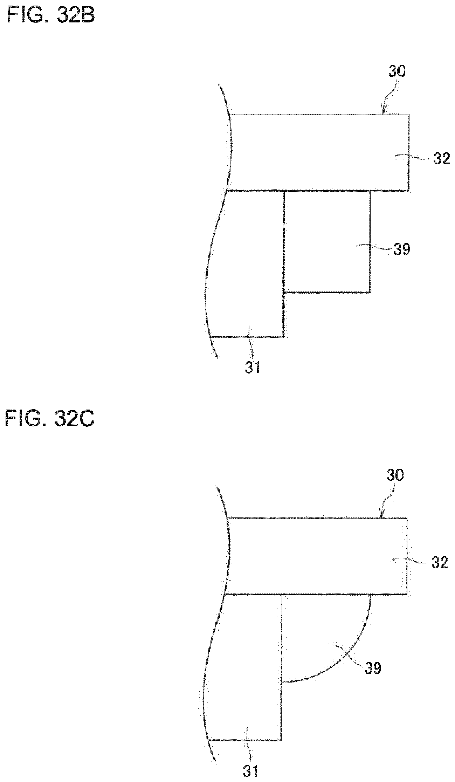

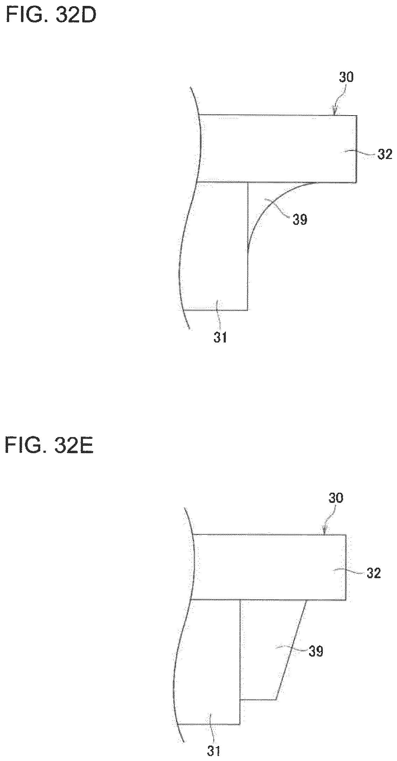

Even in the case where the press-fitting protrusions 39 are continuous to the large-diameter portion 32 and do not have a constricted portion as the press-fitting protrusions 39 which are shown in FIG. 32A to FIG. 32E, as the shapes of a right triangle, a rectangle, a quadrant, a concave, and a symmetric trapezoid, respectively, the application is allowed. However, a metal flow portion in the case where the joining assist member 30 is press-fitted into the top plate 10 as described above cannot be ensured, and therefore the effect of the improvement of the temporary restriction cannot be largely expected. However, the above-described effect of the rotation suppression can be expected. Even in such a mode, therefore, the press-fitting protrusions 39 are preferably disposed on the outer peripheral surface of the small-diameter portion 31.

Furthermore, another preferred embodiment of the joining assist member 30 that is used in the arc welding method is described.

In a similar manner as described above, as other means for surely holding the joining assist member 30 to the top plate 10 until the arc welding step (step S3), also a solution in which the body diameter of the small-diameter portion 31 is multi-stepped, and "constriction" is partly disposed in place of the disposition of the press-fitting protrusions 39 on the small-diameter portion 31 is effective.

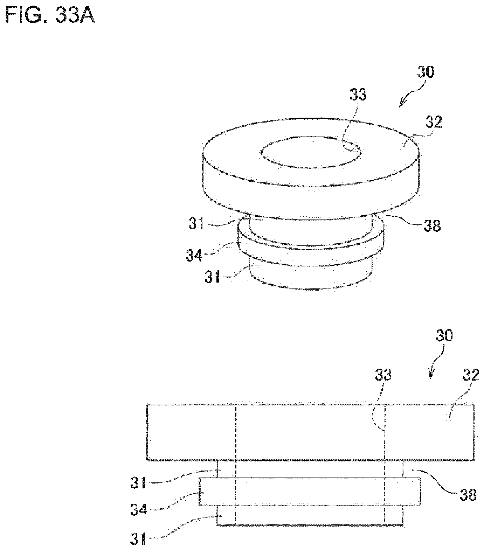

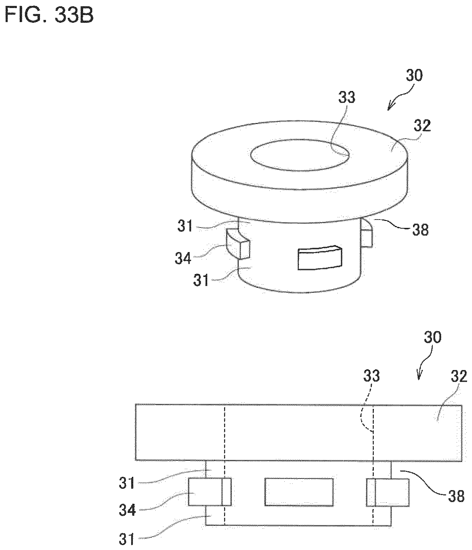

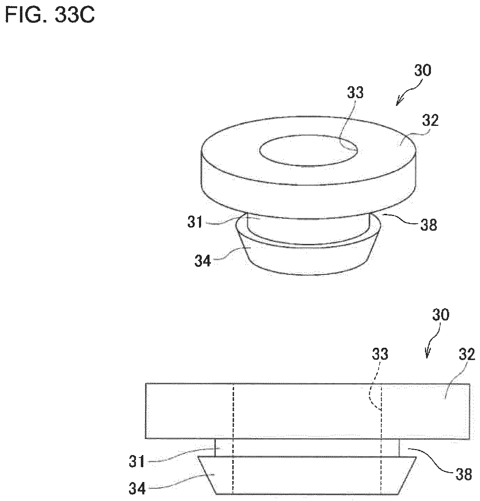

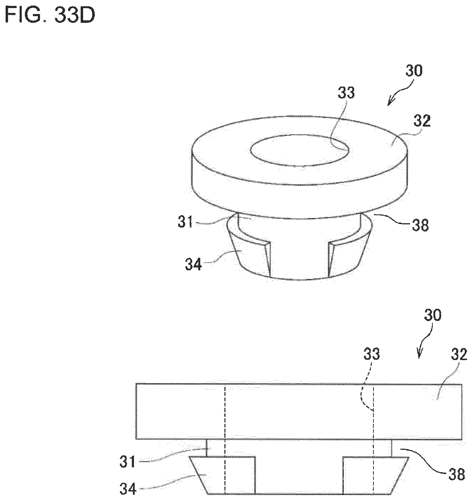

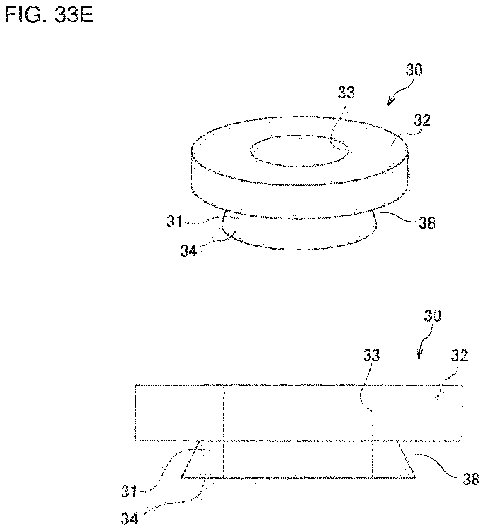

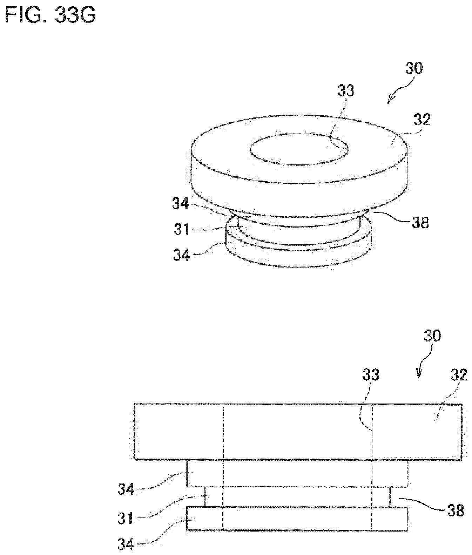

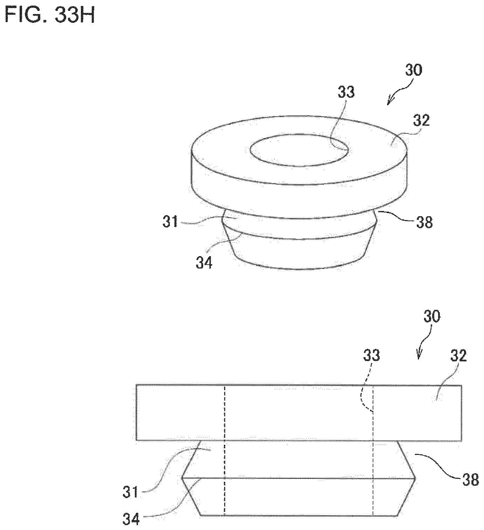

Specifically, as shown in FIG. 33A to FIG. 33H, a medium-diameter portion 34 that is smaller in the maximum outer diameter than the large-diameter portion 32 is disposed on the outer peripheral surface of the small-diameter portion 31 of the joining assist member 30. The medium-diameter portion 34 is not in contact with the large-diameter portion 32, and is disposed continuously (FIG. 33A, FIG. 33C, and FIG. 33E to FIG. 33H) or intermittently (FIG. 33B or FIG. 33D) along the outer peripheral surface of the small-diameter portion 31.

When the medium-diameter portion 34 satisfying the above-described requirements is disposed on the outer peripheral surface of the small-diameter portion 31, there is a constricted portion 38 in a part of the joining assist member 30 that is to be press-fitted into the top plate 10.

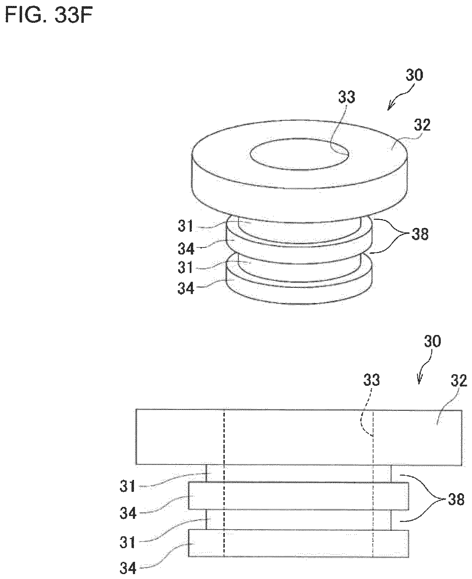

These examples are common in that relative relationships of: [1] the medium-diameter portion 34 is disposed on the tip end side of the small-diameter portion 31; [2] the small-diameter portion 31 is disposed between the medium-diameter portion 34 and the large-diameter portion 32; and [3] the large-diameter portion 32 is disposed on the non-insertion side, are established. Also a case where a plurality of medium-diameter portions 34, and a plurality of small-diameter portions 31 are provided as shown in FIG. 33F may be possible. In view of the above-described requirements, however, there is no problem even when the case is ignored. The above-described requirements are satisfied as far as at least one arrangement exists in which the relationship of large-diameter portion - small-diameter portion - medium-diameter portion is established in the longitudinal direction (insertion direction) of the joining assist member 30.

When the condition is attained, the joining assist member 30 is not easily disengaged on the same principle as that which is described in the embodiment of the case where the press-fitting protrusions 39 are disposed on the joining assist member 30. That is, when the medium-diameter portion 34 is passed in the press fitting of the joining assist member 30 the Al or Mg alloy is elastically deformed, and then plastically deformed. When the press fitting is further advanced to reach the small-diameter portion 31, the elastically deformed portion returns. Because of this, the metal flow occurs to cause a barrier against a force that pushes back the joining assist member 30.

In place of the configuration where the medium-diameter portion 34 is disposed on the entire circumference of the small-diameter portion 31, the medium-diameter portion 34 may be partly disposed, i.e., intermittently disposed as shown in FIG. 33B and FIG. 33D. In the configuration where the medium-diameter portion is intermittently disposed, in the case where the small-diameter portion 31 that is the insertion portion of the joining assist member 30 has a true circular shape, an effect that a situation where the top plate 10 and the bottom plate 20 are easily relatively rotated also after the welding can be prevented is expected, in a similar manner as the case where the press-fitting protrusions 39 are disposed.

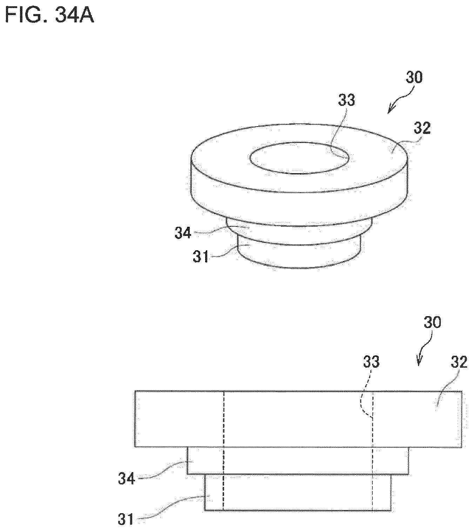

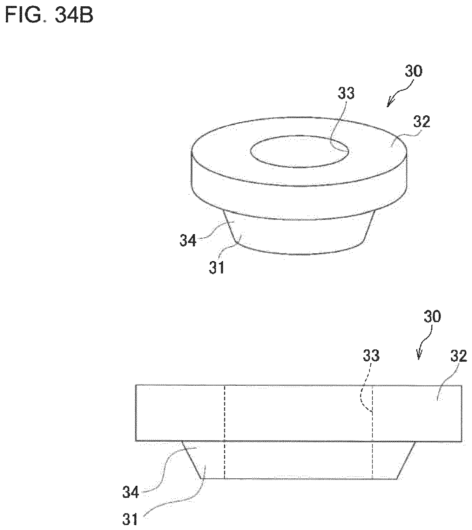

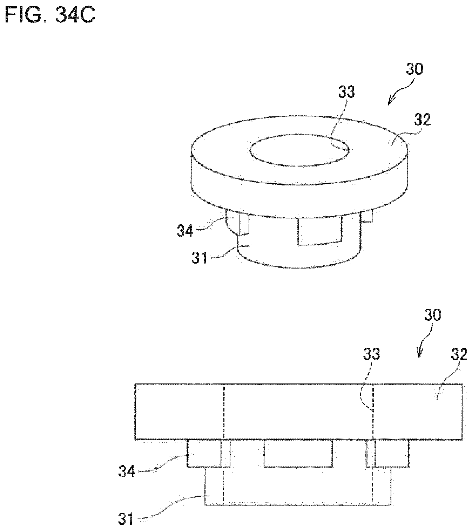

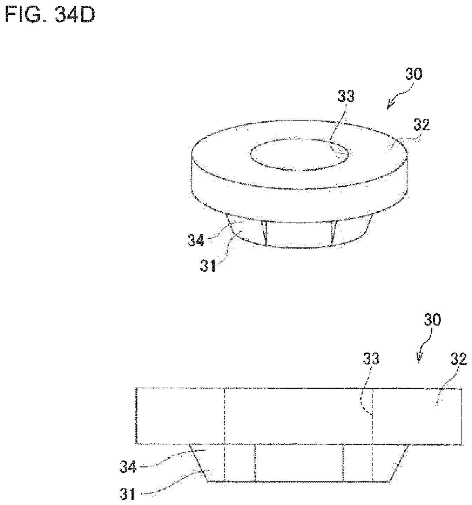

Even in the joining assist member 30 in which the large-diameter portion 32 and the medium-diameter portion 34 are continuous as viewed in the longitudinal direction (insertion direction) of the joining assist member 30 as shown in FIG. 34A to FIG. 34D, the application is allowed. However, the metal flow portion in the case where the joining assist member 30 is press-fitted into the top plate 10 as described above cannot be ensured, and therefore the effect of the improvement of the temporary restriction and that of the rotation suppression cannot be expected. In the case where the medium-diameter portion 34 is intermittent, however, only the effect of the rotation suppression is achieved.

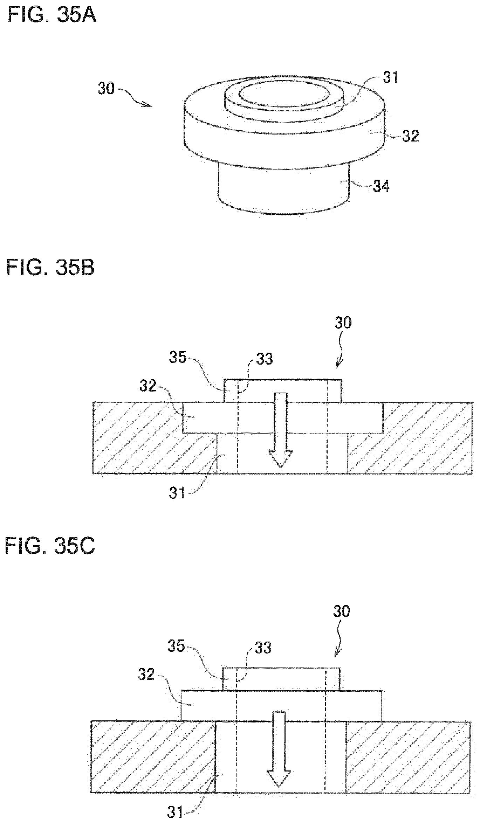

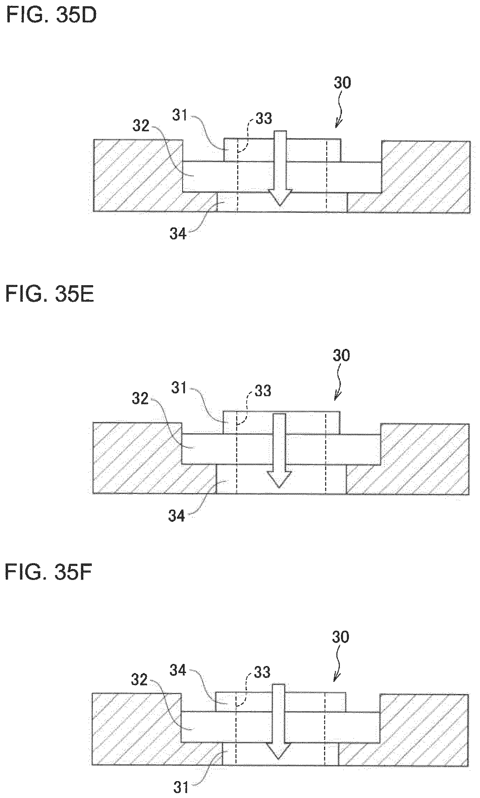

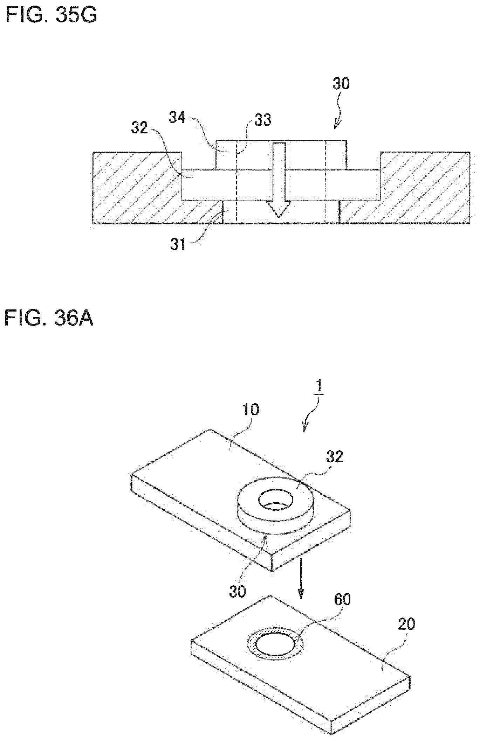

The joining assist member 30 in the embodiment may have a shape in which the small-diameter portion 31 is stacked on the large-diameter portion 32 as shown in FIG. 35A. In the case where the side, as viewed from the large-diameter portion 32, that is opposite to the insertion direction in which the joining assist member is to be punched in the Al or Mg alloy is at a position which is higher than the surface of the top plate 10 (in FIG. 35B and FIG. 35C, the side is defined as a projection 35), however, this does not affect the joint strength.

On the other hand, in the case where, as shown in FIG. 35D to FIG. 35G, at least a part of the small-diameter portion 31 or medium-diameter portion 34 that is disposed on the upper side of the large-diameter portion 32 is at a position which is lower than the surface of the top plate 10, the part affects not a little the joint strength.

Although it is not always necessary to restrict the thickness of the top plate 10 or the bottom plate 20, it is desirable to set the thickness of the top plate 10 to be 5.0 mm or smaller when the working efficiency and the overlapping welding shape are taken into consideration. On the other hand, it is desirable that the thickness of both the top plate 10 and the bottom plate 20 be 0.5 mm or larger because, considering the heat input of the arc welding, an unduly small thickness causes burn-through and thereby makes the welding difficult.

With the above measures, the top plate 10 made of an aluminum alloy or a magnesium alloy and the bottom plate 20 made of steel can be joined strongly.

It is known that the direct joining of different kinds of metals is associated with a problem other than the formation of IMCs. That is, when different kinds of metals are brought into contact with each other, a galvanic cell is formed, which is a cause of accelerating corrosion. Corrosion caused by this phenomenon (anode reaction in the cell) is called electric corrosion. Corrosion is accelerated if water exists in an interface where different kinds of metals are in contact with each other. Thus, where the embodiment is applied to a joining location into which water is prone to intrude, it is necessary to subject the joining location to sealing treatment for preventing intrusion of water to prevent electric corrosion. Also in this joining method, since there are a plurality of interfaces where an Al alloy or Mg alloy comes into contact with steel, it is preferable to use a resin-based adhesive not only for further increase of joint strength but also as a sealing material.

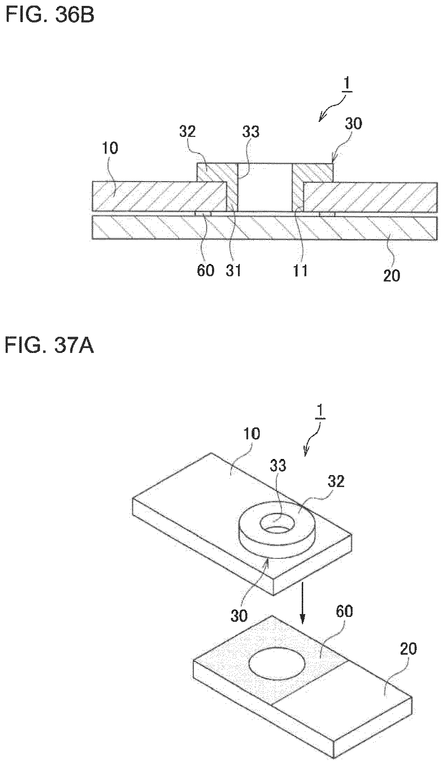

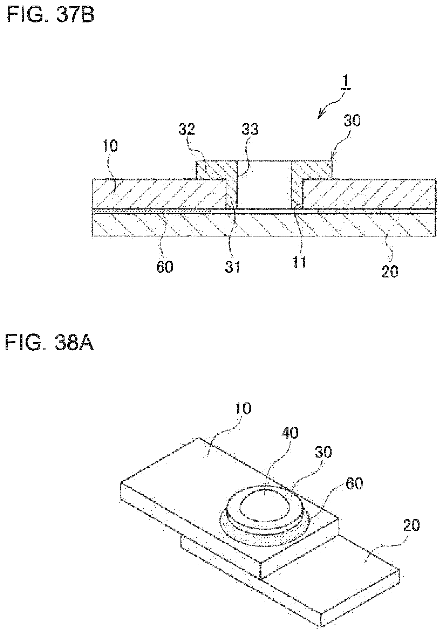

For example, as in a modification shown in FIG. 36A and FIG. 36B, before the overlapping step of the top plate 10 and the bottom plate 20, adhesive 60 may be applied annularly around a welding portion over the entire circumference between the joining surfaces of the top plate 10 and the bottom plate 20. As a method for applying the adhesive 60 around a welding portion over the entire circumference between joining surfaces of the top plate 10 and the bottom plate 20 includes a case where, as a modification shown in FIG. 37A and FIG. 37B, the adhesive is applied to the entire area of the joining surfaces excluding the welding portion. This makes it possible to lower the electric corrosion rates of the top plate 10, the bottom plate 20, and the weld metal 40.

In the above-described punching step, the adhesive 60 may be applied to at least one of the confronting surfaces between the joining assist member 30 and the top plate 10 confronting the joining assist member 30. With this measure, the electric corrosion rates of the top plate 10, the joining assist member 30, and the weld metal 40 can be lowered.

In this case, an effect that the joining assist member 30 is temporarily fastened to the top plate 10 before the arc welding is achieved as a side effect. In the case where arc welding is applied in a horizontal or overhead position as shown in FIG. 25, when the adhesive 60 is applied, it is possible to prevent the joining assist member 30 from dropping by gravity, and the welding can be appropriately practiced.

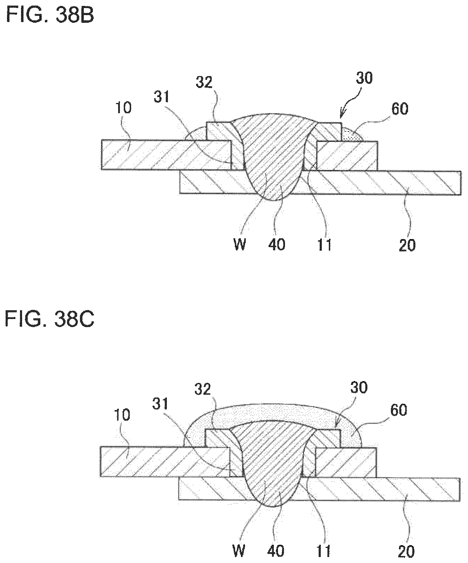

As in a modification shown in FIG. 38A and FIG. 38B, the adhesive 60 may be applied to the boundary between the large-diameter portion 32 of the joining assist member 30 and the surface of the top plate 10. As shown in FIG. 38C, alternatively, the adhesive 60 may be applied so as to cover the whole large-diameter portion 32. This achieves an effect that the electric corrosion rates in the surfaces in which the joining assist member 30 and the Al or Mg alloy are in contact with each other, and which is on the side of the exposed surface, the hidden surface of the joining assist member 30 that is under the large-diameter portion 32, and the end face of the punching performed by the joining assist member 30 are lowered. When the adhesive is applied before the arc welding, also an effect that the joining assist member 30 is temporarily fastened to the top plate 10 is achieved. In the modification, the adhesive can be applied either before the welding step (during the punching step) or after the welding step.

It is further preferable that, not only the electric corrosion suppressing means due to an adhesive or a sealing material, but also a surface treatment for forming a coating film of an electrically ignoble element, a processed substance of the element, an insulative substance, or a passivation substance is performed on the joining assist member 30 in order to prevent rust of the member itself, and electric corrosion with respect to an aluminum plate from occurring. Examples of the surface treatment are galvanization, chromium plating, nickel plating, aluminum plating, tin plating, resin coating, and ceramic coating.

According to the above-described configuration, materials of an Al or Mg alloy of the top plate 10, and steel of the bottom plate 20 can be strongly joined together irrespective of a closed cross section structure and an open cross section structure. Moreover, the combined use of an adhesive can improve the joining strength, and prevent corrosion from occurring.

Since the welding method of the embodiment can be called spot welding where there is a small joining area, in the case of joining overlapped portions J of materials of actual use having a relatively large joining area, this welding method may be employed at plural positions as shown in FIG. 39A to FIG. 39C. With this measure, strong joining can be attained in the overlapped portions J. Whereas the embodiment can be used for open cross section structures as exemplified in FIG. 39B and FIG. 39C, it can be used particularly suitably for closed cross section structures as exemplified in FIG. 39A.

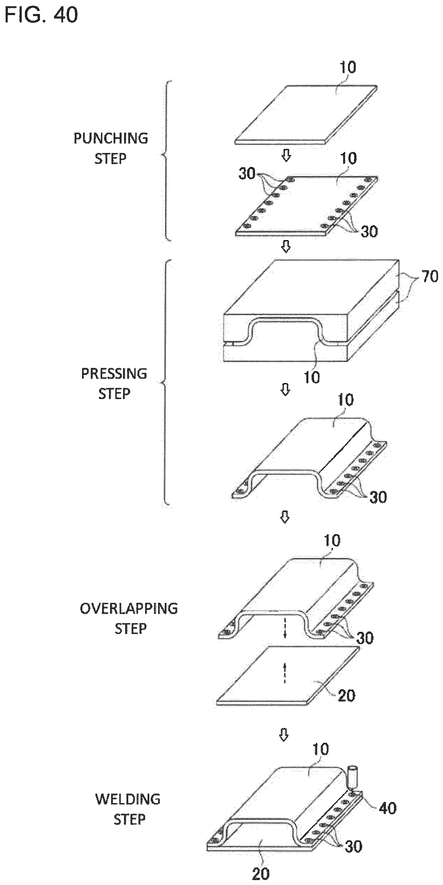

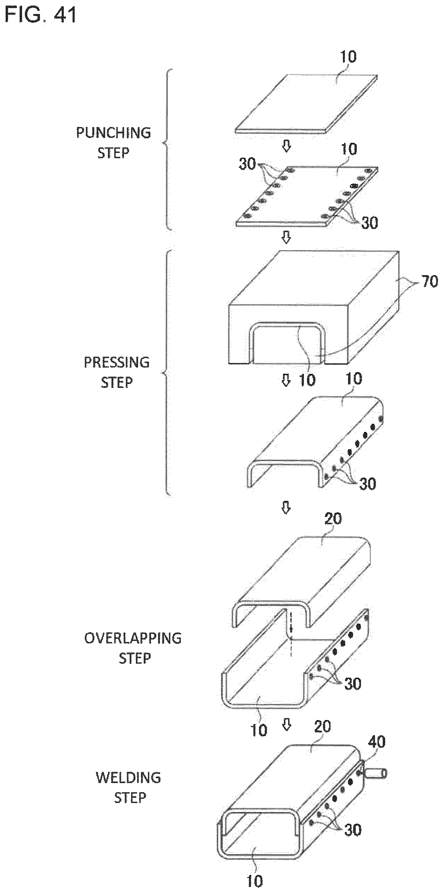

As in a production process for an open cross section member shown in FIG. 40, and that for a closed cross section member shown in FIG. 41, in the joining method, it is also possible that, as the pre-welding process, the joining assist member 30 is totally embedded in the top plate 10. Since the joining assist member 30 that is embedded in the top plate 10 is not protruded from the surface of the top plate 10, an Al or Mg base plate is easily subjected, after embedding, to a press molding process by using molds or the like, and, in a subsequent step, the base plate can be joined with the bottom plate 20. Of course, the welding method can be performed in production without discriminating an open cross section structure and a closed cross section structure.

Although the various embodiments have been described with reference to the drawings, it is a matter of course that the invention is not limited to such examples. It is obvious to those skilled in the art that various changes and modifications can be made within the scope of the claims. It should be understood that they fall within the technical scope of the invention. The components of the embodiments can be arbitrarily combined with one another without departing from the spirit of the invention.

The application is based on Japanese Patent Application (No. 2018-035397) filed on February 28, 2018, and its disclosure is incorporated herein by reference.

### DESCRIPTION OF REFERENCE NUMERALS [0080]

- 1: dissimilar material welded joint
- 10: top plate (first plate)
- 11: hole
- 20: bottom plate (second plate)
- 30: joining assist member
- 31: small-diameter portion
- 32: large-diameter portion
- 33: hollow portion
- 34: medium-diameter portion
- 35: projection
- 37: notch
- 38: constricted portion
- 39: press-fitting protrusion
- 40: weld metal
- 50: lower pedestal
- 51: upper pedestal
- 60: adhesive
- 80: pressing mechanism
- 90: welding torch
- 92: pressing leg
- W: melting portion
- Wa: excess weld metal
- M: base material piece
- G: gap
- P: protrusion amount
- J: overlapped portion

## Claims

1. An arc welding method for dissimilar material joining for joining a first plate made of an aluminum alloy or a magnesium alloy and a second plate made of steel, the method comprising:
a step of placing a steel-made joining assist member that has a stepped external shape including a large-diameter portion and a small-diameter portion that is smaller in maximum outer diameter than the large-diameter portion, has a hollow portion formed to penetrate the large-diameter portion and the small-diameter portion, and has a total height of the large-diameter portion and the small-diameter portion being equal to or larger than a thickness of the first plate, in a manner that the small-diameter portion faces the first plate, and applying a pressure to the joining assist member to punch the first plate;
a step of overlapping the first plate with the second plate; and
a step of filling the hollow portion of the joining assist member with a weld metal, and melting the weld metal until a penetration bead is formed on the second plate, to weld the second plate and the joining assist member together by any method of the following (a) to (e):
(a) a gas-shielded arc welding method using, as a consumable electrode, a welding wire to provide the weld metal made of an iron alloy or a Ni alloy;
(b) a non-gas arc welding method using the welding wire as a consumable electrode;
(c) a gas tungsten arc welding method using the welding wire as a non-consumable electrode filler;
(d) a plasma arc welding method using the welding wire as a non-consumable electrode filler; and
(e) a coated arc welding method using, as a consumable electrode, a coated arc welding rod to provide the weld metal made of an iron alloy or a Ni alloy.

2. The arc welding method for dissimilar material joining according to claim 1, wherein at least one press-fitting protrusion is disposed on an outer peripheral surface of the small-diameter portion.

3. The arc welding method for dissimilar material joining according to claim 1, wherein a medium-diameter portion that is smaller in maximum outer diameter than the large-diameter portion is disposed on an outer peripheral surface of the small-diameter portion, without being in contact with the large-diameter portion, and continuously or intermittently along the outer peripheral surface.

4. The arc welding method for dissimilar material joining according to any one of claims 1 to 3, the method further comprising, before the overlapping step, a step of applying an adhesive to at least one of overlapped surfaces of the first plate and the second plate around a hole of the first plate over its entire circumference, the hole being formed in the punching step.

5. The arc welding method for dissimilar material joining according to any one of claims 1 to 3, wherein in the punching step, an adhesive is applied to at least one of confronting surfaces between the joining assist member and the first plate opposed to the joining assist member.

6. The arc welding method for dissimilar material joining according to any one of claims 1 to 3, wherein, in the punching step or after the filling and welding step, an adhesive is applied to at least a boundary between the joining assist member and a surface of the first plate.

7. The arc welding method for dissimilar material joining according to any one of claims 1 to 3, wherein a protrusion amount of the small-diameter portion of the joining assist member from the first plate is 25% or less of a thickness of the first plate.

8. The arc welding method for dissimilar material joining according to any one of claims 1 to 3, wherein in the filling and welding step, a pressing mechanism that is able to perform pressing in a direction in which the first plate and the second plate are closely contacted with each other is provided, and
the second plate and the joining assist member are welded together while the pressing mechanism performs pressing in a manner that the first plate and the second plate are closely contacted with each other.

9. The arc welding method for dissimilar material joining according to claim 8, wherein the pressing mechanism is provided in a welding torch that is used in the filling and welding step, and the pressing mechanism comprises a pressing portion that abuts against at least one of the first plate and the joining assist member.

10. The arc welding method for dissimilar material joining according to any one of claims 1 to 3, wherein the first plate is punched so that an exposed surface of the large-diameter portion of the joining assist member is located to be nearly flush with or outside a surface of the first plate.

11. The arc welding method for dissimilar material joining according to any one of claims 1 to 3, wherein in the filling and welding step, when the hollow portion of the joining assist member is filled with the weld metal, an excess weld metal is formed on a surface of the joining assist member.
